# EUROPÄISCHE PATENTSCHRIFT

(11) **EP 4 042 222 B1**
(45) Veröffentlichungstag und Bekanntmachung des Hinweises auf die Patenterteilung: **03.07.2024**
(21) Anmeldenummer: 20800791.4
(22) Anmeldetag: 12.10.2020
(51) Int. Cl.: G02B 21/00

(54) **VERFAHREN UND VORRICHTUNG ZUR ABERRATIONSKORREKTUR IN DER FLUORESZENZMIKROSKOPIE**
METHOD AND APPARATUS FOR CORRECTING ABERRATIONS IN FLUORESCENCE MICROSCOPY
PROCÉDÉ ET DISPOSITIF DE CORRECTION D'ABERRATION DANS UN MICROSCOPE À FLUORESCENCE

(30) Priorität: 11.10.2019 DE 102019007066
(43) Veröffentlichungstag der Anmeldung: 17.08.2022
(73) Patentinhaber: Abberior Instruments GmbH, 37077 Göttingen (DE)
(72) Erfinder: REUSS, Matthias, 37083 Göttingen (DE); HEINE, Jörn, 37213 Witzenhausen (DE); WURM, Christian, 37077 Göttingen (DE)
(74) Vertreter: REHBERG HÜPPE + PARTNER
(86) Internationale Anmeldenummer: PCT/EP2020/078627
(87) Internationale Veröffentlichungsnummer: WO 2021/069743

(56) Entgegenhaltungen:
- REINIG MARC R ET AL: "Enhancing image quality in cleared tissue with adaptive optics", JOURNAL OF BIOMEDICAL OPTICS, SPIE, 1000 20TH ST. BELLINGHAM WA 98225-6705 USA, Bd. 21, Nr. 12, 1. Dezember 2016 (2016-12-01), Seite 121508, XP060082642, ISSN: 1083-3668, DOI: 10.1117/1.JBO.21.12.121508 [gefunden am 2016-10-13]
- BOOTH M J ET AL: "Adaptive aberration correction in a confocal microscope", PROCEEDINGS OF THE NATIONAL ACADEMY OF SCIENCES, NATIONAL ACADEMY OF SCIENCES, US, Bd. 99, Nr. 9, 30. April 2002 (2002-04-30) , Seiten 5788-5792, XP002407828, ISSN: 0027-8424, DOI: 10.1073/PNAS.082544799
- PHILIPP KATRIN ET AL: "Axial scanning and spherical aberration correction in confocal microscopy employing an adaptive lens", PROCEEDINGS OF SPIE; [PROCEEDINGS OF SPIE ISSN 0277-786X VOLUME 10524], SPIE, US, Bd. 10679, 24. Mai 2018 (2018-05-24), Seiten 106790E-106790E, XP060109058, DOI: 10.1117/12.2307377 ISBN: 978-1-5106-1533-5
- Travis J Gould ET AL: "Adaptive optics enables 3D STED microscopy in aberrating specimens References and links", Annu. Rev. Cell Dev. Biol. Nat. Methods Opt. Lett. Science Biophys. J. Nat. Methods Biophys. J. Biophys. J. Science Opt. Express Nat. Methods Proc. Natl. Acad. Sci. U.S.A. Proc. Natl. Acad. Sci. U.S.A. Nat. Methods Proc. Natl. Acad. Sci. U.S.A. Opt., 29. August 2012 (2012-08-29), Seiten 285-314, XP055263554, Gefunden im Internet: URL:http://www.eng.ox.ac.uk/dop/papers/STE D_3D_AO_Gould_OpEx_2012.pdf [gefunden am 2016-04-07]
- POLAND S P ET AL: "Evaluation of fitness parameters used in an iterative approach to aberratioon correction in optical sectioning microscopy", APPLIED OPTICS, OPTICAL SOCIETY OF AMERICA, WASHINGTON, DC, US, Bd. 47, Nr. 6, 20. Februar 2008 (2008-02-20), Seiten 731-736, XP001511630, ISSN: 0003-6935, DOI: 10.1364/AO.47.000731

## Beschreibung

### TECHNISCHES GEBIET DER ERFINDUNG

Die Erfindung bezieht sich auf die Mikroskopie an dreidimensional ausgedehnten Proben, insbesondere auf die konfokale Laser-Fluoreszenzmikroskopie, die STED-Mikroskopie und die MINFLUX-Mikroskopie.

Genauer bezieht sich die Erfindung auf ein Verfahren nach dem Oberbegriff des Anspruchs 1 und auf ein scannendes Fluoreszenzmikroskop nach dem Oberbegriff des Anspruchs 11 oder 12.

### STAND DER TECHNIK

Aus dem US-Patent US 6 473 228 B1 ist ein Mikroskop mit einer Einrichtung zur Korrektur von Aberrationen und ein Verfahren zur Korrektur von Aberrationen bekannt. Um Korrektureinstellungen zu finden, wird an einer axialen Position eine Reihe von Bildern der Probe aufgenommen, wobei die Bilder der Reihe mit unterschiedlichen Einstellungen der Korrektureinrichtung vorgenommen werden. Es wird automatisch bestimmt, bei welcher der Einstellungen der Bildkontrast am größten ist, hierfür wird die "hill climbing contrast detecting method" vorgeschlagen, bei der die Korrektureinrichtung so lange gleichsinnig verstellt wird, wie der Kontrast von Bild zu Bild steigt, und bei der das Verfahren beendet wird, sobald der Kontrast wieder abnimmt. Die zugehörigen Einstellwerte seien die mit der besten Korrektur der Aberrationen. Eine solche Reihe von Bildern wird nun zu einer Vielzahl axialer Positionen aufgenommen, zu der Vielzahl axialer Positionen werden entsprechend zugehörige Einstellwerte der Korrektureinrichtung bestimmt. Im Fall, dass dieses Verfahren an einer dreidimensional ausgedehnten Probe durchgeführt wird, erhält man so auch direkt für jede axiale Position ein Bild, welches bei einer guten Korrektur der Aberrationen aufgenommen wurde. Anstelle der Probe könne ein Testobjekt mit identischen optischen Eigenschaften wie eine Probe genutzt werden, um Einstellwerte abhängig von einer axialen Bildlage zu bestimmen. Die an dem Testobjekt gewonnenen Werte werden gespeichert, bei der späteren Beobachtung einer Probe werden sie abgerufen und zur Einstellung der Korrektur zugehörig zur jeweiligen axialen Bildlage genutzt. In diesem Fall kann es ausreichen, an der Probe je axialer Position ein einziges Bild aufzunehmen. Die Temperatur des Testobjekts beim Gewinnen der Einstellwerte könne gespeichert werden, bei der Beobachtung der Probe könnte die Einstellung der Aberrationskorrektur bzgl. einer Temperaturdifferenz zwischen Testobjekt und Probe rechnerisch weiter angepasst werden, sodass bei der Beobachtung temperaturkorrigierte Einstellwerte angewendet werden. Die axialen Lagen können, um für verschiedene axiale Lagen Korrekturparameter zu bestimmen, automatisch angefahren werden.

In EP 2 770 360 A2 wird allgemein ein Verfahren zur Bestimmung eines Einstellwerts einer Einrichtung zur Korrektur von Aberrationen an einer axialen Position beschrieben. Beschrieben und beansprucht wird ein Mikroskop mit einer Korrektureinrichtung und einer Kontrolleinrichtung, die eingerichtet ist, an einer Mehrzahl axialer Positionen das Verfahren zur Bestimmung des Einstellwerts auszuführen und aus den Einstellwerten zu dieser Mehrzahl von Positionen mittels Interpolation eine Funktion zu bestimmen, die den Zusammenhang zwischen axialer Position und Einstellwert ausdrückt; das Mikroskop weist weiter eine Antriebseinrichtung für die Korrektureinrichtung auf, die für jede axiale Position entsprechend dem von der Kontrolleinrichtung bestimmten optimalen Korrekturwert eingestellt wird. Die Bestimmung eines Einstellwerts erfolgt jeweils anhand der Beobachtung einer Ebene in der Probe, die senkrecht zur optischen Achse ausgerichtet ist.

In EP 3 035 104 A2 werden Verfahren zur Bestimmung von Einstellwerten einer Einrichtung zur Korrektur von Aberrationen und eine Kontrolleinrichtung, die eingerichtet ist, das Verfahren automatisch anzuwenden, beschrieben. Im Besonderen geht es um ein iteratives Verfahren zur Bestimmung eines Einstellwertes an einer axialen Position, d. h. der Bestimmung eines Einstellwerts zu einer Bildebene, die senkrecht zur optischen Achse ausgerichtet ist. In der Schrift wird darauf hingewiesen, dass vielfach ein Korrekturwert mit zunehmender Tiefe der Beobachtungsebene linear ansteige und dass sich dieser lineare Anstieg dann ändere, wenn in einer Probe an einen Bereich mit einem Brechungsindex ein solcher mit einem anderen Brechungsindex anschließe, sodass die Beziehung zwischen Korrekturwert und axialer Position oder Beobachtungstiefe durch einen stückweise linearen Zusammenhang ausgedrückt werden könne. Weiter wird beschrieben, dass zunächst ein dreidimensionales Bild einer Probe aufgenommen werden solle, ohne dass die Korrektureinrichtung eingestellt wird; dieses Bild werde dargestellt und einem Anwender gezeigt, der nun anhand des Bilds einen Bereich auswählen solle, insbesondere einen Bereich zwischen zwei axialen Positionen, den er beobachten möchte. In diesem Bereich wird nun das Verfahren zur Bestimmung des Einstellwerts für mehrere Beobachtungstiefen durchgeführt. Weiter wird vorgeschlagen, dass ein Zusammenhang zwischen den für verschiedene Beobachtungstiefen bestimmten Einstellwerten und der Beobachtungstiefe grafisch als funktionaler Zusammenhang abgebildet werden soll; der Anwender kann nun anhand der Darstellung verschiedene Bereiche festlegen, innerhalb der jeweils ein linearer Zusammenhang zwischen Einstellwert und Beobachtungstiefe angenommen werden soll; alternativ kann der Zusammenhang für jeden oder einzelne Teilbereiche auch als nicht-linearer funktionaler Zusammenhang festgelegt werden. Für die Bestimmung der Einstellwerte können auch in den Richtungen senkrecht zur optischen Achse Teilbereiche festgelegt werden, innerhalb derer jeweils das Verfahren zur Bestimmung der Einstellwerte angewendet werden soll. Während der Beobachtung der Probe wird die Korrektureinrichtung in Abhängigkeit von der Bobachtungstiefe und ggf. auch von der lateralen Position entsprechend der vorher bestimmten Werte eingestellt.

In den Publikationen von Booth, M. J. et. al., "Refractive-Index-Mismatch Induced Aberrations in Single-Photon and Two-Photon Microscopy and the Use of Aberration Correction", J. Biomed. Opt. 6 (3), 266 (2001) und von Booth et. Al., "Aberration correction for confocal imaging in refractive-index-mismatched media", Journal of Microscopy, Vol. 192, Pt 2, 90-98 (1998) werden Herleitungen dafür angegeben, dass die alleine durch eine Fehlanpassung des Brechungsindexes eines Mediums, in das eine Probe eingebettet sein kann, hervorgerufenen Aberrationen durch eine Summe radialsymmetrischer Zernike-Polynome beschrieben werden können, wobei die gesamte Funktion linear von der axialen Position im Medium anhängt. Unter diesen Zernike-Polynomen ist auch eine Funktion, die eine Verschiebung der mittleren Phase der Wellenfront beschreibt; eine solche Verschiebung wirkt sich auf die Bildqualität nicht aus. Der erste relevante Summand ist das radialsymmetrischen Zernike-Polynom zur Ordnung 2, welches die Defokussierung beschreibt, der zweite Summand ist das radialsymmetrischen Zernike-Polynom zur Ordnung 4, welches die sphärische Aberration erster Ordnung beschreibt, der dritte Summand gehört zur Ordnung 6 und beschreibt die sphärische Aberration zweiter Ordnung und so fort. Es wird in der späteren der beiden Publikationen, d.i. in "Refractive-Index-Mismatch Induced Aberrations in Single-Photon and Two-Photon Microscopy and the Use of Aberration Correction", gezeigt, dass diese sphärischen Aberrationen sowohl bei Beobachtung einer Probe mittels Einphotonen-Fluoreszenzanregung mit einem Konfokalmikroskop als auch bei Zweitphotonenanregung zu einer näherungsweise linearen Abnahme der Auflösung mit steigender Beoboachtungstiefe führen. In "Aberration correction for confocal imaging in refractive-index-mismatched media" werden ein Verlust an Bildhelligkeit und ein Verlust an Auflösung als wesentliche Auswirkungen der Aberrationen bezeichnet. In beiden Publikationen wird vorgeschlagen, in ein Mikroskop ein adaptives Element zu integrieren, dass eine Wellenfront derart moduliert, dass die durch die Fehlanpassung hervorgerufenen Aberrationen ausgeglichen werden. Gemäß der späteren Publikation werde der Verlust an Signal und Auflösung damit vermieden.

In der Publikation von Patton, Brian R. et al., "Three-dimensional STED microscopy of aberrating tissue using dual adaptive optics", OPTICS EXPRESS, Vol. 24, No. 8, 8862-8876 (2016), wird ein STED-Mikroskop mit integrierter adaptiver Optik zu Korrektur von Aberrationen vorgestellt. Die Einstellung der adaptiven Korrektur erfolgt anhand einer Bewertung der Bildqualität von Bildern zu Bildebenen in einer x-y-Ebene, also zu Ebenen senkrecht zur optischen Achse. Es wird festgestellt, dass neben sphärischen Aberrationen auch Koma und weitere höhere, nicht radialsymmetrische Aberrationen aufträten. Mit Bezug auf den Einfluss der Koma wird eine Modellbildung genannt. Ergebnisse der Modellbildung sind in einer Figur dargestellt, es zeige sich, dass die Auswirkung der Koma im Fokus des STED-Strahls am deutlichsten in einem y-z-Schnitt zu sehen seien. In diesem Zusammenhang sei betont, dass es sich um die Darstellung von Modelldaten handelt und es sei weiter darauf hingewiesen, dass der STED-Fokus als solcher in der Fluoreszenzdetektion im Regelfall der Beobachtung entzogen ist.

In der Publikation von Patton, Brian R. et al., "Is phase-mask alignment aberrating your STED microscope?", Methods Appl. Fluoresc. 3 (2015) 024002, ist dargestellt, dass ein schlechtes Alignment einer Phasenmaske zur Wellenfrontformung für den STED-Strahl ähnliche Auswirkungen zeigt wie Koma. Es wird sowohl anhand von Modelldaten als auch anhand von an Gold-Beads aufgenommen experimentellen Daten gezeigt, dass die Ursache der Störung, also Koma oder Fehljustage, anhand von x-z-Scans innerhalb eines STED-Fokus erkannt werden könne. Die Unterscheidung sei anhand von STED-Fluoreszenzbildern kaum möglich, sodass leicht Koma und Fehljustage verwechselt werden könne.

In der internationalen Offenlegungsschrift WO 2014 029978 A1 wird ein Mikroskop mit einer Einrichtung zur Korrektur von Aberrationen beschrieben. Beansprucht wird ein Verfahren zur Aberrationskorrektur, das als wesentlich Bezug auf ein besonderes Maß zur Messung der Bildqualität nimmt. Es habe sich gezeigt, dass weder der Bildkontrast noch die Bildhelligkeit jeweils für sich als Kriterium gut geeignet seien, bzgl. der Aberrationen ideal korrigierte Bilder zu identifizieren. Deswegen wird ein Kriterium festgelegt, dass sowohl Helligkeit als auch Kontrast berücksichtigt. Die Einstellung wird anhand von Bildern zu Bildebenen senkrecht zur optischen Achse gefunden.

In der Dissertation "Intelligent-Illumination STED", Jörn Heine, Göttingen 2017 (abrufbar unter http://hdl.handle.net/11858/00-1735-0000-002E-E3B0-E) wird ein STED-Mikroskop beschrieben, bei dem als Wellenfrontmodulator zum Aufprägen der zur Ausbildung eines STED-Fokus notwendigen Wellenfront ein auf Flüssigkristalltechnologie basierter "spatial light modulator", kurz ein SLM, der in einer speziellen Anordnung integriert ist, genutzt wird. Diese Anordnung wird genutzt, um den STED-Fokus dreidimensional formen zu können. Gleichzeitig wird der SLM genutzt, um Aberrationen auszugleichen. Es werden x-z-Schnitte aus Volumenbildern gezeigt, einmal aus konfokal ohne STED-Strahl aufgenommenen Daten, einmal zu ohne Aberrationskorrektur aufgenommenen Daten und einmal zu mit Aberrationskorrektur aufgenommenen Daten.

Im Artikel von Lenz, Martin O. et al. "3-D stimulated emission depletion microscopy with programmable aberration correction", J. Biophotonics 7, No. 1-2, 29-36 (2014), wird ein weiteres STED-Mikroskop beschrieben, welches in seiner Funktion dem in der Dissertation von Jörn Heine im Wesentlichen entspricht. Auch hier werden x-z-Schnitte aberrationskorrigierter STED-Daten gezeigt. Wie die Korrekturwerte erhalten werden, ist undeutlich beschrieben. Aus der Angabe "in Echtzeit" kann aber erschlossen werden, dass Bilder zu Ebenen senkrecht zur optischen Achse ausgewertet werden dürften; anders scheint eine Echtzeitkorrektur nicht möglich, da das Scannen in z-Richtung eher langsam wäre.

Aus der DE 10 2017 101 188 A1 sind ein Verfahren zum Mikroskopieren einer Probe mit einem Mikroskop und ein entsprechendes Mikroskop bekannt, welches ein Objektiv und einen Bildsensor zum Wandeln eines von dem Objektiv auf den Bildsensor abgebildeten Bilds umfasst. Ein Sichtfeld des Mikroskops ist durch Auswahl eines Abschnittes des Bildsensors veränderbar. Um ein initiales Bild zumindest eines Teilbereiches der Probe mit dem Mikroskop aufzunehmen, wird ein erstes Sichtfeld am Mikroskop gewählt. Das initiale Bild wird analysiert, um zumindest zwei sich unterscheidende teilbereichsabbildende Sichtfelder zu ermitteln, durch die jeweils ein Teilbereich des initialen Bilds abgebildet wird. Für jedes der ermittelten teilbereichsabbildenden Sichtfelder werden Bilder der Teilbereiche der Probe aufgenommen. Zusätzlich werden das initiale Bild und mehrere der mikroskopischen Bilder mit einer Tiefeninformation aufgenommen, sodass es sich um dreidimensionale Bilder handelt. Zum Aufnehmen des initialen Bilds bzw. der mikroskopischen Bilder mit einer erweiterten Schärfentiefe und der zusätzlichen Tiefeninformation wird ein Aktuator an einem aktiven optischen Element des Mikroskops gestellt. Bei dem Aktuator handelt es sich um einen Fokusaktuator und/oder um einen Aberrationsaktuator. In einer Ausführungsform ist der optische Aktuator als ein Mikrosystem mit mechanisch beweglichen Mikrospiegeln zur Aufnahme einer erweiterten Schärfentiefe ausgebildet. Durch eine Veränderung der Lage der Mikrospiegel erlaubt dieses Mikrosystem eine sehr schnelle Einstellung der abzubildenden Fokusebene. So wird es ermöglicht, in kurzer Zeit eine Vielzahl von Aufnahmen in benachbarten Fokusebenen aufzunehmen. Eine derartige Folge von Bildern, welche in unterschiedlichen Fokusebenen aufgenommen wurden, wird auch als Fokus-Stapel bezeichnet. Aus einem Fokus-Stapel kann ein Bild mit erweiterter Schärfentiefe ermittelt werden. Die mikroskopischen Bilder der Teilbereiche sind auch als Kacheln zu bezeichnen. Das bekannte Verfahren ist somit zur Mikroskopie großer Proben wie beispielsweise einer Leiterplatte geeignet. Die aufgenommenen mikroskopischen Bilder der Teilbereiche werden dabei zu einem Gesamtbild der Probe zusammengefügt. Für jeden der Teilbereiche wird ein teilbereichsabbildendes Sichtfeld bestimmt und zur Aufnahme des entsprechenden Bilds verwendet. Neben dem Sichtfeld werden weitere Parameter des Mikroskops zur Aufnahme der mikroskopischen Bilder der Teilbereiche der Probe angepasst, die im Ergebnis der Analyse des initialen Bilds bestimmt und beim Aufnehmen der mikroskopischen Bilder der Teilbereiche am Mikroskop gewählt werden. Die weiteren Parameter des Mikroskops umfassen Parameter zur Aberrationssteuerung und/oder Parameter zum Stellen des Aktuators des aktiven optischen Elementes.

Aus Reinig, Marc R. et al. "Enhancing image quality in cleared tissue with adaptive optics", J. Biomed. Opt. 21 (12), 121508 (2016), ist ein Verfahren zum Verbessern der Bildqualität in geklärtem Gewebe mit Hilfe einer adaptiven Optik bekannt. Dazu wird mit einem Shack-Hartmann-Wellenfront (SHWF)-Sensor zunächst eine nicht aberrierte Referenzwellenfront bestimmt und dann im Verhältnis dazu eine aberrierte Wellenfront für Licht aus unterschiedlichen Tiefen einer Probe bestimmt. Auf dieser Basis werden die ersten 22 Zernike-Aberrationen, der quadratische Fehler der Wellenfront und die Strehl-Zahl in einem Zweiphotononen-Mikroskop bestimmt. Die bestimmten Aberrationen werden dann mit Hilfe der adaptiven Optik korrigiert.

Booth, Martin J. et al. "Adaptive aberration correction in a confocal microscope" PNAS. Vol. 99, No. 9, 5788-5792 (2002) offenbaren eine Aberrationsmessung- und Korrektur, bei der mit einem verformbaren Spiegel eine willkürliche Aberration eingeführt wird. Dann wird ein Imagescan durchgeführt und ein Mittelwert über alle Pixelwerte gebildet. Anschließend wird eine äquivalente negative willkürliche Aberration mit dem verformbaren Spiegel eingeführt, ein zweiter Bildscan durchgeführt und erneut ein Mittelwert über alle Pixelwerte gebildet. Die Differenz zwischen den mittleren Pixelwerten ist proportional zum Betrag der vorliegenden Zernike-Moden. Daraus wird die notwendige Korrektur durch berechnet. Gezeigt werden konfokale xz-Schnittbilder, die vor und nach einer solchen Aberrationskorrektur aufgenommen wurden.

Aus Philip, Kathrin et al. "Axial scanning and spherical aberration correction in confocal microscopy employing an adaptive lens" ist es bekannt, A-Scans entlang der optischen Achse durchzuführen, wobei zu jeder Position längs der optischen Achse die Intensität eines Fokus-Punkts und mittels Zernike-Zerlegung der erhaltenen Phase der sphärische Aberrationskoeffizient bestimmt wird.

Aus Gould, Travis J. et al. "Adaptive optics enables 3D STED microscopy in aberrating specimens" OPTICS EXPRESS 20998 Vol. 20, No. 19 (2012) ist es bekannt, Aberrationen mit Hilfe einer adaptiven Optik zu korrigieren, die mit einem Wert einer Metrik angesteuert wird. Die Metrik hängt von Bildhelligkeit und Bildschärfe ab. Es sind xz-Schnittbilder einer STED PSF und eines fluoreszenten Beads vor und nach einer solchen Korrektur mit Hilfe der Metrik dargestellt.

Aus Poland, Simon P. et al. "Evaluation of fitness parameters used in an iterative approach to aberration correction in optical sectioning microscopy" wird eine Aberrationskorrektur mit Hilfe eines verformbaren Spiegels an Hand verschiedener Fitnessparameter durchgeführt. Zu den Fitnessparametern zählen die Intensität sowie aus der axialen Halbwertsbreite einer gemessenen PSF abgeleitete Werte.

### AUFGABE DER ERFINDUNG

Der Erfindung liegt die Aufgabe zugrunde, ein Verfahren zur mikroskopischen Bildaufnahme dreidimensional ausgedehnter Proben mit einer verbesserten Korrektur der in einer dreidimensional ausgedehnten Probe auftretenden Aberrationen anzugeben. Eine weitere Aufgabe ist es, eine Vorrichtung mit einer auf das Verfahren gerichteten Benutzerschnittstelle anzugeben.

### LÖSUNG

Die Aufgabe der Erfindung wird durch ein Verfahren mit den Merkmalen des unabhängigen Patentanspruchs 1 und durch ein scannendes Fluoreszenzmikroskop mit den Merkmalen des Anspruchs 11 oder 12 gelöst. Die abhängigen Ansprüche 2 bis 10 betreffen bevorzugte Ausführungsformen des Verfahrens und die abhängigen Ansprüche 13 bis 15 bevorzugte Ausführungsformen des scannenden Fluoreszenzmikroskops.

### BESCHREIBUNG DER ERFINDUNG

Das erfindungsgemäße Verfahren zur mikroskopischen Bildaufnahme dreidimensional ausgedehnter Proben weist folgende Schritte auf: In einem ersten Schritt erfolgt eine Aufnahme eines zu der optischen Achse eines Mikroskopobjektivs parallelen ersten Schnittbilds durch Abtasten einer ersten Probe mit einer fokussierten Anregungslichtverteilung in einer zu der optischen Achse des Mikroskopobjektivs parallelen Schnittfläche, wobei die Anregungslichtverteilung mittels einer einstellbaren Korrektureinrichtung gemäß anfänglicher Einstellparameter einer Aberrationskorrekturfunktion korrigiert wird und wobei zu jeder Abtastposition aus der ersten Probe emittiertes Fluoreszenzlicht detektiert wird, alternativ erfolgt die Aufnahme einer ersten Mehrzahl solcher Schnittbilder; in einem zweiten Schritt erfolgt eine Auswertung des ersten Schnittbilds oder alternativ der ersten Mehrzahl solcher Schnittbilder; in einem dritten Schritt erfolgt das Festlegen neuer Einstellparameter der Aberrationskorrekturfunktion; in einem vierten Schritt erfolgt eine Aufnahme weiterer Bilddaten durch Abtasten einer Probe, die die erste oder eine andere Probe sein kann, mit der fokussierten Anregungslichtverteilung, wobei die Anregungslichtverteilung mittels der einstellbaren Korrektureinrichtung gemäß der neuen Einstellparameter der Aberrationskorrekturfunktion korrigiert wird und wobei zu jeder Abtastposition aus der Probe emittiertes Fluoreszenzlicht detektiert wird. Die genannten Schritte werden in der Reihenfolge ihrer Nennung ausgeführt.

Die Angabe, dass das erste Schnittbild und zugehörige Schnittfläche zu der optischen Achse des Mikroskopobjektivs parallel sind, schließt die Möglichkeit ein, dass die optischen Achse des Mikroskopobjektivs in dem ersten Schnittbild und der zugehörigen Schnittfläche verläuft. Alternativ dazu verläuft die optischen Achse des Mikroskopobjektivs in einem Abstand zu der dem ersten Schnittbild und der zugehörigen Schnittfläche.

Die Angabe, dass die Anregungslichtverteilung in dem ersten Schritt gemäß anfänglicher Einstellparameter einer Aberrationskorrekturfunktion korrigiert wird, schließt die Möglichkeit ein, dass die anfänglichen Einstellparameter der Aberrationskorrekturfunktion in dem ersten Schritt noch zu keiner Aberrationskorrektur führen.

Die Abberationskorrekturfunktion ist eine Funktion einer längs der optischen Achse des Mikroskopobjektivs variierenden z-Position in der Probe. Das heißt, die Anregungslichtverteilung wird mittels der einstellbaren Korrektureinrichtung zumindest dann, wenn die neuen Einstellparameter der Aberrationskorrekturfunktion zur Anwendung kommen, nicht für alle z-Positionen in der Probe gleich korrigiert.

Die Einstellparameter der Abberationskorrekturfunktion können insbesondere Verstärkungsfaktoren und Offsets von einzelnen Komponenten der Abberationskorrekturfunktion sein.

Die Angabe, dass die genannten Schritte in der Reihenfolge ihrer Nennung ausgeführt werden, schließt nicht aus, dass zwischen den genannten vier Schritten noch weitere Schritte ausgeführt werden, bei denen es sich auch um Wiederholungen bereits ausgeführter Schritte handeln kann.

Wird eine "Mehrzahl solcher Schnittbilder" aufgenommen, so können die einzelnen Schnittbilder dieser Mehrzahl mit untereinander identischen oder mit untereinander unterschiedlichen Einstellparametern der Aberrationskorrekturfunktion aufgenommen werden.

Ergibt im zweiten Schritt die Auswertung des ersten Schnittbilds oder der Mehrzahl der ersten Schnittbilder, dass die Aberrationen hinreichend korrigiert sind, können die im dritten Schritt festgelegten neuen Einstellparameter und die anfänglichen Einstellparameter identisch sein. In der Regel wird die Auswertung ergeben, dass die Aberrationen nicht hinreichend korrigiert sind. In diesem Falle werden die Einstellparameter im dritten Schritt geändert.

Wurde eine Mehrzahl von Schnittbildern mit untereinander unterschiedlichen anfänglichen Einstellparametern der Aberrationskorrekturfunktion aufgenommen, so kann die Auswertung der Mehrzahl von Schnittbildern ergeben, dass die zu einem Bild der Mehrzahl gehörenden anfänglichen Einstellparameter eine ausreichend Aberrationskorrektur bewirken. In diesem Fall können die zu diesem Bild gehörenden anfänglichen Einstellparameter als neue und gleichzeitig finale Einstellparameter festgelegt werden.

Unter Schnittbild oder Bild wird hier, wie dies auch üblich ist, nicht nur die grafische, visuell wahrnehmbare Repräsentation von Bilddaten verstanden, sondern es wird darunter auch der Bilddatensatz, der jeweils einer grafischen Repräsentation zugrundegelegt werden kann verstanden.

Das erfindungsgemäße Verfahren ist dadurch gekennzeichnet, dass die Schnittfläche, in der die Probe in dem ersten Schritt mit der fokussierten Anregungslichtverteilung abgetastet wird, parallel zu der optischen Achse des Mikroskopobjektivs verläuft, sodass das erste Schnittbild parallel zu der optischen Achse des Mikroskopobjektivs aufgenommen wird. Ein solches in Längsrichtung der optischen Achse des Mikroskopobjektivs verlaufendes Schnittbild lässt in dem zweiten Schritt der Auswertung nicht nur leicht erkennen, ob, sondern gegebenenfalls auch wie die anfänglichen Einstellparameter der Aberrationskorrekturfunktion zu korrigieren sind, d. h. wie die neuen Einstellparameter der Aberrationskorrekturfunktion in dem dritten Schritt festzulegen sind. Dies ist darin begründet, dass das in Längsrichtung der optischen Achse des Mikroskopobjektivs verlaufende Schnittbild den Verlauf der Auswirkungen der trotz Aberrationskorrektur verbliebenen Aberrationen in Tiefenrichtung der Probe aufzeigt. Hieraus können Art und Größe der verbliebenen Aberrationen leicht, d. h. auch intuitiv richtig erkannt bzw. recht genau abgeschätzt werden und damit notwendige Änderungen beim Festlegen der neuen Einstellparameter ebenfalls gut abgeschätzt werden. Das in Längsrichtung der optischen Achse des Mikroskopobjektivs verlaufende Schnittbild geht sowohl hinsichtlich seiner intuitiven Interpretierbarbeit als auch seiner Informationsdichte deutlich über bekannte Grundlagen für die Optimierung einer Aberrationskorrekturfunktion, wie beispielsweise ein dreidimensionales Bild der Probe oder einen Stapel von normal zu der optischen Achse des Mikroskopobjektivs verlaufenden Schnittbildern, die beide nur schwer anzeigbar und visuell erfassbar sind, hinaus.

Die Auswertung des ersten Schnittbilds oder der ersten Mehrzahl der Schnittbilder kann entweder automatisch mittels mathematischer Bildanalyseverfahren und Nutzung zugehöriger Kriterien zur Bestimmung der Aberrationen, die sich im Schnittbild oder in der Mehrzahl der Schnittbilder ausgewirkt haben, erfolgen oder sie kann durch visuelle Inspektion durch einen menschlichen Beobachter erfolgen. Im letzten Fall wird das Schnittbild oder die Mehrzahl der Schnittbilder oder ein aus der Mehrzahl der Schnittbilder gewonnenes Schnittbild grafisch dargestellt, z. B. auf einem Monitor oder Bildschirm als Graustufenbild oder als farbiges Bild unter Anwendung einer Farbtabelle oder als entsprechende Bildreihe der Mehrzahl der Schnittbilder, und der Beobachter schätzt die Aberrationen anhand des Bilds oder der Bildreihe, z.B. anhand der im Bildfeld oder den Bildfeldern ggf. variierenden Bildschärfe und/oder der im Bildfeld oder den Bildfeldern ggf. variierenden Bildhelligkeit ab. Ähnliche oder identische Kriterien, die aus dem Stand der Technik bekannt sind, können auch eine Grundlage für eine automatische Auswertung des Schnittbilds oder der Mehrzahl der Schnittbilder sein. Ebenso kann eine dafür geeignete Steuerung durch Machine Learning zur automatischen Auswertung des Schnittbilds oder der Mehrzahl der Schnittbilder angelernt werden.

Erfolgt eine automatische Auswertung des Schnittbilds oder der Mehrzahl der Schnittbilder, so kann auch die Festlegung der neuen Einstellparameter automatisch erfolgen.

In beiden Fällen, d. h. sowohl bei automatischer Auswertung als auch bei visueller Inspektion, ist es möglich, im Falle der Auswertung durch visuelle Inspektion durch einen menschlichen Beobachter z.B. aufgrund von dessen Erfahrung, dass auf Basis der Auswertung im dritten Schritt unmittelbar finale Einstellparameter der Aberrationskorrekturfunktion festgelegt werden können und festgelegt werden. Besonders einfach ist das möglich, wenn im ersten Schritt eine Mehrzahl von Bildern zu sich unterscheidenden anfänglichen Einstellparametern aufgenommen wurde.

Werden im dritten Schritt finale Einstellparameter festgelegt, so ist die Aufnahme weiterer Bilddaten im vierten Schritt schon die Gewinnung der Bilddaten, an denen der Beobachter als Ergebnis seiner mikroskopischen Untersuchung interessiert ist.

Können nicht schon im dritten Schritt finale Einstellparameter der Aberrationskorrekturfunktion festgelegt werden oder besteht Unsicherheit darüber, ob die Korrektureinrichtung bei Anwendung der festgelegten Einstellparameter eine ausreichende Korrektur der Aberration bewirken wird, so kann die Aufnahme weiterer Bilddaten im vierten Schritt eine Aufnahme eines weiteren Schnittbilds durch Abtasten der ersten Probe mit einer fokussierten Anregungslichtverteilung in einer zu der optischen Achse des Mikroskopobjektivs parallelen Schnittfläche oder einer weiteren Mehrzahl von solchen Schnittbildern sein. Grundsätzlich kann in diesem Fall im vierten Schritt unabhängig davon, ob im ersten Schritt ein erstes Schnittbild oder eine erste Mehrzahl von Schnittbildern aufgenommen wurde, ein einzelnes Schnittbild oder eine Mehrzahl von Schnittbildern aufgenommen werden.

Das im vorgenannten dritten Schritt erhaltene Schnittbild oder diese im vorgenannten Schritt erhaltene Mehrzahl von Schnittbildern wird nun in einem weiteren Schritt ausgewertet, wobei unabhängig von der Art der Auswertung im zweiten Schritt die Auswertung im weiteren Schritt entweder automatisch mittels mathematischer Bildanalyseverfahren oder durch visuelle Inspektion durch einen menschlichen Beobachter erfolgen kann. Häufig wird die Auswertung im weiteren Schritt aber entsprechend der Auswertung im zweiten Schritt erfolgen, d. h. auf eine automatische Auswertung folgt eine weitere automatische Auswertung und auf eine visuelle Inspektion folgt eine weitere visuelle Inspektion. Dies muss aber nicht immer gelten, wie weiter unten ausgeführt ist.

Es ist nun wieder, wie nach der Auswertung im zweiten Schritt, möglich, dass auf Basis der Auswertung in diesem weiteren Schritt in einem dem weiteren Schritt folgenden Schritt unmittelbar finale Einstellparameter der Aberrationskorrekturfunktion festgelegt werden können und festgelegt werden oder dass nicht schon in diesem folgenden Schritt finale Einstellparameter der Aberrationskorrekturfunktion festgelegt werden können oder dass Unsicherheit darüber besteht, ob die Korrektureinrichtung bei Anwendung der im folgenden Schritt festgelegten Einstellparameter eine ausreichende Korrektur der Aberration bewirken wird. Werden finale Einstellparameter festgelegt, so erfolgt anschließend oder später unter Anwendung der festgelegten Einstellparameter die Aufnahme der Bilddaten, an denen der Beobachter als Ergebnis seiner mikroskopischen Untersuchung interessiert ist. Werden nach einer Auswertung Einstellparameter festgelegt, die nicht als final angenommen werden, so wird erneut ein weiteres Schnittbild durch Abtasten der ersten Probe mit einer fokussierten Anregungslichtverteilung in einer zu der optischen Achse des Mikroskopobjektivs parallelen Schnittfläche oder eine Mehrzahl von solchen Schnittbildern aufgenommen und anschließend ausgewertet, und auf Basis der Auswertung erfolgt eine erneute Festlegung neuer Einstellparameter.

Eine solche iterative Ausführung des erfindungsgemäßen Verfahrens kann auch so beschrieben werden, dass nach dem dritten Schritt entweder der erste Schritt und der zweite Schritt oder der der erste Schritt, der zweite Schritt und der dritte Schritt mindestens einmal wiederholt werden, bevor der vierte Schritt ausgeführt wird, in dem die Aufnahme der Bilddaten erfolgt, an denen der Beobachter als Ergebnis seiner mikroskopischen Untersuchung interessiert ist.

Die Iteration wird dann abgebrochen, wenn entweder auf Basis der einer Schnittbildaufnahme oder einer entsprechenden Aufnahme einer Mehrzahl von Schnittbildern folgenden Auswertung finale Einstellparameter festgelegt werden können und festgelegt werden, weil diese beispielsweise von den zuvor festgelegten Einstellparametren um weniger als eine Untergrenze für lohnende weitere Änderungen abweichen, oder wenn eine Auswertung eines Schnittbilds oder einer entsprechenden Mehrzahl von Schnittbildern ergibt, dass die Aberrationen hinreichend korrigiert sind. In diesem Fall werden in einem der Auswertung folgenden nächsten Schritt die zuletzt festgelegten Einstellparameter als finale Einstellparameter festgelegt.

Eine solche iterative Festlegung der Einstellparameter ist dann ohne große Schwierigkeiten möglich, wenn die Anzahl der Einstellparameter gering ist und wenn ein einfacher Zusammenhang zwischen den Einstellparametern und den bei der Bildaufnahme wirksamen Aberrationen besteht. Denn dann ist es möglich, nach Auswertung, z.B. nach visueller Inspektion eines Schnittbilds in einem Festlegungsschritt versuchsweise neue Einstellparameter festzulegen und nach der Schnittbildaufnahme mit den neuen Einstellparametern die Qualität des zuletzt aufgenommenen Schnittbilds mit der des früher aufgenommenen zu vergleichen. Aus dem Vergleich kann erkannt werden, ob die Änderung zu einer Verbesserung oder einer Verschlechterung geführt hat. Aus einem solchen Vergleich ergibt sich dann, ob eine weitere Änderung der Einstellparameter im gleichen Sinne wie die erste Änderung oder im gegenläufigen Sinne erfolgen soll. Ein solcher einfacher Zusammenhang ist z.B. dann gegeben, wenn die Korrektureinrichtung eingerichtet ist, solche Aberrationen zu korrigieren, die durch eine Fehlanpassung des Brechungsindex' des Einbettmediums einer Probe an den des verwendeten Immersionsmediums hervorgerufen wird. Solche Aberrationen lassen sich gemäß der Darstellung in den im Abschnitt zum Stand der Technik genannten zwei Publikationen von Booth, M. J. und jeweiligen Koautoren, "Refractive-Index-Mismatch Induced Aberrations in Single-Photon and Two-Photon Microscopy and the Use of Aberration Correction" sowie "Aberration correction for confocal imaging in refractive-index-mismatched media", durch eine Summe radialsymmetrischer Zernike-Polynome grader Ordnung beschreiben. Die Stärke der Aberration hängt linear mit der axialen oder z-Position im fehlangepassten Medium zusammen. Die Aberrationskorrekturfunktion ist in diesem Fall eine lineare Funktion der z-Position in der Probe. Als Einstellparameter dienen dann ein Aberrationskorrektur-Offset-Wert und eine Aberrationskorrektur-Steigung.

Weiter oben wurde dargelegt, dass häufig auf eine automatische Auswertung eine automatische Auswertung folgen werde sowie dass auf eine visuelle Inspektion eine visuelle Inspektion folgen werde. Insbesondere für den letzten Auswerteschritt, der zur finalen Festlegung der Einstellparameter führt, muss dies nicht gelten. Es kann zum Beispiel sinnvoll sein, dass zunächst eine Reihe von automatischen Auswertungen und Festlegungen neuer Einstellparameter vorgenommen wird, bis z.B. nach Erreichen einer festen Anzahl von Auswertungen oder nach Erreichen einer bestimmten Bildqualität eines Schnittbilds, gemessen anhand festgelegter Kriterien, oder dann, wenn sich von einem zum nächsten Iterationsschritt keine Verbesserung der Bildqualität von einem zum folgenden Schnittbild ergibt, die Reihe automatischer Auswertungen und Festlegungen abgebrochen wird und anschließend der Beobachter eine visuelle Inspektion durchführt. Dem Beobachter obliegt dann die Entscheidung, die Einstellparameter als finale Einstellparameter festzulegen oder selbst geänderte neue Einstellparameter festzulegen, entweder als finale Einstellparameter oder als Grundlage für eine weitere Iteration. Denkbar ist auch, dass der Beobachter den Prozess abbricht, z.B. wenn die Bildqualität nicht ausreichend ist, und z.B. untersucht, ob irgendein Fehler, z.B. eine Blase im Immersionsmedium, eine Beschädigung des Deckglases oder Ähnliches vorliegt. Umgekehrt ist es auch denkbar, dass zunächst eine Reihe visueller Inspektionen und Festlegungen durch den Beobachter durchgeführt wird und anschließend in einem Folgeschritt die Bildqualität des Schnittbilds automatisch anhand festgelegter Kriterien bestimmt wird, sodass dem Beobachter eine objektive Maßzahl dargeboten werden kann, anhand derer er seinen subjektiven Eindruck objektiv überprüft, bevor die Einstellparameter als finale Einstellparameter einer Aberrationskorrekturfunktion festgelegt werden.

Diese Festlegung der Einstellparameter als finale Einstellparameter kann auch implizit oder automatisch, d. h. ohne dass ein Nutzer ausdrücklich eine Aktion zum Festlegen der Einstellparameter als finale Einstellparameter durchführt, erfolgen, beispielsweise indem beim Start z.B. einer mikroskopischen Beobachtung, wie auch immer dieser Start durchgeführt wird, die zuletzt gewählten Einstellparameter als finale Einstellparameter angenommen werden.

Nach Festlegung der finalen Einstellparameter können nun die Bilddaten aufgenommen werden, an denen der Beobachter als Ergebnis seiner mikroskopischen Untersuchung interessiert ist. Grundsätzlich kann die Festlegung der finalen Einstellparameter einer Aberrationskorrekturfunktion anhand von Bilddaten, die an der derselben Probe aufgenommen wurden, die anschließend oder später untersucht wird, erfolgen. Dies ist aber nicht in jedem Fall notwendig. Soll beispielsweise eine Reihe ähnlicher Proben, zum Beispiel eine Reihe von unter kontrollierten, gleichen Bedingungen hergestellten Proben untersucht werden, kann es ausreichen, finale Einstellparameter anhand von Bilddaten einer einzelnen der zu untersuchenden Probe festzulegen und die festgelegten Einstellparameter bei der Bildgewinnung an allen oder zumindest mehreren Proben der Reihe anzuwenden. Denkbar ist es auch, spezielle Referenzproben bereitzuhalten und für die Festlegung der finalen Einstellparameter zu nutzen. Dies ist besonders dann gut zu realisieren, wenn allein durch eine Fehlanpassung des Brechungsindexes eines Mediums, in das eine Probe eingebettet sein kann, an den Brechungsindex eines Immersionsmediums, das auch Luft sein kann, verursachte sphärische Aberrationen durch die einstellbare Korrektureinrichtung korrigiert werden sollen. Die anhand einer Referenzprobe oder einer einzelnen Probe einer Probenreihe als final festgelegten Korrekturparameter können dann bei der mikroskopischen Untersuchung jeder Probe angewendet werden, deren Einbettmedium denselben Brechungsindex aufweist wie das Einbettmedium der Referenzprobe oder der einzelnen Probe der Probenreihe.

Grundsätzlich ist es auch möglich, ähnlich wie im US-Patent US 6 473 228 B1 vorgeschlagen, beim Gewinnen der finalen Einstellparameter einer Aberrationskorrekturfunktion die Temperatur des Referenzobjekts mitzuspeichern und bei der späteren Beobachtung der Probe, d. h. bei der Gewinnung der Bilddaten, an denen der Beobachter als Ergebnis seiner mikroskopischen Untersuchung interessiert ist, die finalen Einstellparameter einer Aberrationskorrekturfunktion entsprechend der Temperatur der Probe zu modifizieren. Dies ist beispielsweise dann besonders vorteilhaft, wenn eine Bildaufnahme unter physiologischen Bedingungen bei 37°C erfolgen soll. Ebenso können die jeweiligen Temperaturen des Immersionsmediums und/oder Temperaturunterschiede zwischen Probe oder Referenzprobe und Immersionsmedium bei Bildaufnahme an der Probe oder der Referenzprobe berücksichtigt werden. Für eine solche Korrektur kann ein Modell gebildet werden, welches die Temperatureffekte hinreichend gut widerspiegelt, beispielsweise in Form der temperaturabhängigen Sellmeier-Gleichung. Alternativ kann auch eine Messreihe zu unterschiedlichen Temperaturen bzw. Temperaturpaarungen an einer Referenzprobe oder an einer als Referenzprobe verwendeten Probe einer zu untersuchenden Probenreihe durchgeführt werden. Ein solches Vorgehen scheint zwar aufwändig, der mit dem Vorgehen verbundene Aufwand kann aber insbesondere im Zusammenhang mit Screenings untereinander vergleichbarer Proben oder aber bei der Untersuchung der Reaktion von Proben bzw. von in der Probe enthaltenen Objekten wie z.B. subzellulären Strukturen auf Temperaturänderungen gerechtfertigt sein. Es hat dann nicht nur den Vorteil, dass die Untersuchung der zu screenenden Menge der Proben weniger Zeit in Anspruch nimmt, sondern auch den Vorteil, dass die zu untersuchenden Proben nicht schon vor der eigentlichen Untersuchung mit Anregungslicht, welches zu einem Bleichen der betroffenen Probenbereiche führen kann, beaufschlagt werden.

Im Falle, dass die finalen Einstellparameter einer Aberrationskorrekturfunktion nicht schon im dritten Schritt festgelegt werden, sondern in einem iterativen Prozess, so werden außer dem zu der optischen Achse eines Mikroskopobjektivs parallelen ersten Schnittbild, das durch Abtasten einer Probe mit einer fokussierten Anregungslichtverteilung in einer zu der optischen Achse des Mikroskopobjektivs parallelen Schnittfläche gewonnen wird, oder der Mehrzahl solcher Schnittbilder, ein oder mehrere weitere Schnittbilder, die durch Abtasten einer Probe mit einer fokussierten Anregungslichtverteilung in einer zu der optischen Achse des Mikroskopobjektivs parallelen Schnittfläche gewonnen werden, oder ein oder mehrere mehrzahlige Mengen solcher Schnittbilder aufgenommen. Im Falle, dass jeweils einzelne Schnittbilder, d. h. keine Mehrzahlen von Schnittbildern, aufgenommen werden, können die zu den verschiedenen Schnittbildern, die in aufeinanderfolgenden Iterationsschritten erhalten werden, korrespondierenden Schnittflächen der Probe identisch sein, müssen es aber nicht. Im Falle, dass in einem oder in mehreren Schritten des iterativen Prozesses mehrzahlige Mengen von Schnittbildern aufgenommen werden, können sich die mit den Schnittbildern korrespondierenden Schnittflächen der Probe oder Mengen von Schnittflächen vollständig oder teilweise decken oder überdecken, müssen es aber nicht.

Für die zu verschiedenen Schnittbildern einer zusammengehörigen mehrzahligen Menge von Schnittbildern korrespondierenden Schnittflächen der Probe gilt Entsprechendes, d. h. auch diese können untereinander identisch sein, müssen es aber nicht. Sie können z.B. zu jeweils parallelen Ebenen gehören oder zu nebeneinander liegenden Bereichen einer Ebene.

Decken sich die in nacheinander folgenden Schritten eines iterativen Prozesses zum Finden der Einstellparameter verwendeten Schnittflächen der Probe, so hat dies die Wirkung, dass genau für diese eine Schnittfläche besonders geeignete Einstellparameter der Aberrationskorrekturfunktion gefunden werden können. Außerdem ist die Vergleichbarkeit der Schnittbilder untereinander besonders gut. Ein Nachteil ist, dass die Probe in der betreffenden Schnittfläche mehrfach mit Anregungslicht beaufschlagt wird und somit vergleichsweise stärker gebleicht werden kann. Ein weiterer Nachteil ist, dass im Falle, dass die Probe in lateraler Richtung inhomogen ist, z.B. wenn sich der Brechungsindex der Probe in lateraler Richtung ändert, die Korrektur in Nachbarbereichen zur Schnittfläche von geringerer Qualität ist.

In vielen, aber nicht in allen Fällen, werden die Schnittflächen Schnittebenen sein, wobei darunter in diesem Zusammenhang nicht die ganze unendlich ausgedehnte Ebene, zu der die Schnittfläche gehört, verstanden werden soll, sondern die ebene Schnittfläche als solche.

Unterscheiden sich zumindest einige der in nacheinander folgenden Schritten eines iterativen Prozesses zum Finden der Einstellparameter verwendeten Schnittebenen der Probe, so hat dies die Wirkung, dass während des Findens der Einstellparameter ein lateral ausgedehnter Bereich genutzt wird. Zwar wird dann ein größerer Bereich der Probe gebleicht, jede einzelne Schnittebene wird aber weniger gebleicht, als wenn sich deckende Schnittebenen genutzt werden. Besonders günstig kann es sein, als letzte Schnittebene vor dem Festlegen der finalen Einstellparameter oder dem Festlegen der im vorangehenden Festlegungsschritt festgelegten Einstellparameter eine Schnittebene zu wählen, die in einem der früheren Schritte der Iteration gewählt wurde. Hierbei kann erkannt werden, ob die an der vorangehend abgebildeten Schnittebene gewonnenen Einstellparameter gleichermaßen geeignet sind für eine Aberrationskorrektur in der zuletzt gewählten Schnittebene. Ähnliches gilt, wenn an Stelle von Schnittebenen nicht-ebene Schnittflächen verwendet werden.

Die Aufnahme einer Mehrzahl von Schnittbildern zu einer Menge unterschiedlicher Schnittebenen der Probe im ersten Schritt und/oder in entsprechenden folgenden Schritten eines iterativen Prozesses hat die Wirkung, dass in jedem zugehörigen Auswerteschritt Informationen über lateral beabstandete Schnittebenen oder über in einem Winkel zueinander orientierte Schnittebenen gewonnen werden. Es ist z.B. möglich und sinnvoll, in einem ersten Schritt eine Menge von Schnittebenen auszuwählen, von denen eine in einem lateralen ersten Randbereich der Probe oder des Bereichs der Probe, den der Beobachter mikroskopisch untersuchen möchte, d. h. des interessierenden Bereichs, liegt und von denen eine andere entsprechend lateral gegenüber liegt. Ob und ggf. zu wie vielen Schnittebenen zwischen diesen beiden jeweils in einem Randbereich gelegenen Schnittebenen Schnittbilder aufgenommen werden, kann sich nach der lateralen Ausdehnung des interessierenden Bereichs und nach der Art der Probe richten. In einem Auswerteschritt, in dem Schnittbilder mehrerer Schnittebenen, die mit denselben Einstellungen der Korrektureinrichtung aufgenommen wurden, ausgewertet werden, kann durch Vergleich der Schnittbilder, durch visuellen oder automatischen Vergleich, erkannt werden, ob in den verschiedenen Schnittebenen vergleichbare oder sogar gleiche Aberrationen wirksam sind oder ob sich die Aberrationen zwischen einzelnen lateralen Positionen unterscheiden. Es ist dann möglich, anhand der Auswertung der Schnittbilder, in lateraler Richtung gesehen, Teilbereiche der Probe festzulegen, für die jeweils gesondert Einstellparameter der Korrekturfunktion festgelegt werden sollen. Eine solche Festlegung kann schon nach der Auswertung der Menge der ersten Schnittbilder erfolgen. Es ist aber auch möglich, dass zunächst auf Basis aller Schnittbilder Einstellparameter festgelegt werden, die in einem folgenden Schritt bei der Aufnahme einer weiteren Mehrzahl von Schnittbildern zu entsprechenden Schnittebenen verwendet werden, und dass erst in einem der später folgenden Schritte ein Festlegung von Teilbereichen erfolgt, wenn sich in den schon mit teilweiser Korrektur der Aberrationen aufgenommenen Schnittbildern zeigt, dass für eine vollständige oder jedenfalls hinreichende Korrektur für verschiedene laterale Bereiche der Probe jeweils verschiedene Einstellparameter notwendig sind. Unter entsprechenden Schnittebenen sind solche Ebenen zu verstehen, die identisch zu schon verwendeten oder eng benachbart zu schon verwendeten Schnittebenen sind.

Es ist außerdem möglich, anhand der Auswertung eines einzelnen Schnittbilds festzustellen, ob auftretende Aberrationen entlang der lateralen Ausdehnungsrichtung des Schnitts gleich sind oder sich entlang dieser Richtung verändern. Dies gilt dann auch für jedes einzelne Schnittbild einer Mehrzahl von Schnittbildern zu einer Mehrzahl von Schnittebenen. Dies bedeutet, dass anhand einer Aufnahme einer Mehrzahl von Schnittbildern zu parallelen Ebenen erkannt werden kann, ob für die Probe in beiden lateralen Richtungen Teilbereiche festzulegen sind, für die Einstellwerte der Korrekturfunktion jeweils separat festzulegen sind. Auch hier gilt, dass es möglich ist, dass das Festlegen von Teilbereichen erst in einem späteren Iterationsschritt nach vorangehender teilweiser Korrektur erfolgt.

Eine weitere Möglichkeit ist es, verschieden orientierte Schnittebenen festzulegen. Insbesondere ist es möglich, sich senkrecht schneidende Schnittebenen festzulegen. Werden beispielsweise zwei Schnittebenen festgelegt, die sich in lateralen Richtungen in oder nahe der Mitte des interessierenden Bereichs schneiden und jeweils bis an den Rand, über den Rand oder in die Nähe des Randes des interessierenden Bereichs erstrecken, kann auf besonders einfache Weise erkannt werden, ob die Probe in lateralen Richtungen in Teilbereiche einzuteilen ist, um eine ausreichende Korrektur zu erreichen.

Eine Einteilung der Probe in Teilbereiche kann auf Basis einer visuellen Inspektion durch den Nutzer erfolgen oder auch automatisch. Es ist möglich, die einzelnen Varianten zu kombinieren, z.B. können im ersten Schritt zwei sich senkrecht schneidende Schnittebenen aufgenommen werden, anschließend erfolgt ein oder erfolgen mehrere Auswerte- und Festlegungsschritte anhand eines einzelnen Schnittbilds und daran anschließend wird eine Mehrzahl paralleler Schnittbilder aufgenommen, ausgewertet und zur Festlegung neuer Einstellparameter genutzt.

Es kann auch der Bedarf bestehen, die Probe oder jeweilige laterale Teilbereiche der Probe axial in Abschnitte einzuteilen. Dies gilt z.B. dann, wenn sich der Brechungsindex des Einbettmediums der Probe oder ein wirksamer, lokal gemittelter Brechungsindex der Probe in axialer Richtung ändert. Dies gilt z.B. aber auch, wenn in der Probe enthaltene Strukturen lokal Aberrationen hervorrufen. Letzteres ist in der Fluoreszenzmikroskopie an biologischen Proben häufig der Fall. Befindet sich beispielsweise eine Zelle im Beleuchtungs- und Detektionspfad, so ist häufig der der Zelle entlang des Beleuchtungspfads nachgeordnete Bereich von starken Aberrationen betroffen, während der Bereich bis zur Zelle und ggf. in die Zelle hinein und lateral neben der Zelle von deutlich geringeren Aberrationen betroffen ist. Je nach Zellstruktur und Form der Zelle können die Aberrationen ähnlich einer Koma, einem Astigmatismus oder irgendeiner anderen der bekannten Klassen von Aberrationen oder von Kombinationen daraus sein. Auch sphärische Aberrationen können durch solche lokalen Strukturen verursacht werden. Die durch lokale Strukturen hervorgerufenen Aberrationen haben aber die Gemeinsamkeit, dass sie sich lokal auswirken, und zwar auch in dem Sinne lokal, dass die Auswirkung auch axial in Beleuchtungsrichtung bzw. entgegen der Detektionsrichtung mit steigendem Abstand abnehmen. Gerade im Zusammenhang mit solchen lokalen Strukturen tritt ein besonderer Vorteil des erfindungsgemäßen Verfahrens zu Tage. Würden nämlich, wie aus dem Stand der Technik bekannt, Korrekturterme aus senkrecht zur optischen Achse orientierten Schnittbildern bestimmt, ist eine Berücksichtigung der lokalen Wirkung gar nicht oder nur mit großem Aufwand möglich. Denn in keinem der einzelnen Bilder wären Bereiche über, in und unterhalb betreffender lokaler Strukturen gleichzeitig enthalten. Beim erfindungsgemäßen Verfahren ist dies aber der Fall, da zu jeder Struktur innerhalb der betrachteten Schnittebene ein Schnittbild gewonnen wird, wobei zu dem Bild eben gerade Bereiche über, in und unterhalb der betreffenden lokalen Strukturen gehören. So kann auf Basis der Schnittbilder leicht entschieden werden, ob eine globale Korrektur mit globalen Einstellparametern für einen größeren Bildbereich ausreichend ist oder ob in einem Nahbereich eine gesonderte, ggf. additiv zu einer globalen Korrektur hinzukommende Korrektur notwendig oder jedenfalls sinnvoll ist.

Eine Einteilung der Probe in axiale Teilbereiche kann auf Basis einer visuellen Inspektion durch den Nutzer erfolgen oder auch automatisch. Mit Blick auf die Berücksichtigung lokaler Strukturen ist eine Einteilung auf Basis einer visuellen Inspektion einfacher realisierbar. Denn jedenfalls dann, wenn die Einstellparameter anhand derselben Probe bestimmt werden, die der Nutzer untersuchen möchte, kann der Nutzer anhand der Schnittbilder leicht entscheiden, ob die lokal auftretenden Aberrationen relevant sind. Ist er beispielsweise an einem unterhalb einer Zelle liegenden Bereich nicht interessiert, sondern nur am Zellinnern und an Bereichen, die beispielsweise axial so weit entfernt sind, dass die lokale Aberration nicht zum Tragen kommt, wird er auf eine Festlegung von Teilbereichen verzichten. Liegt eine solche Situation an einer Stelle in der Probe vor oder liegt eine solche Situation in einer Mehrzahl von Schnittbildern vor, so besteht eine große Wahrscheinlichkeit, dass in der gesamten Probe oder jedenfalls in einem gesamten Teilbereich auf eine lokal eng begrenzte Korrektur verzichtet werden kann. Im Falle, dass der Beobachter beispielsweise an biologischen Strukturen im Randbereich von Zellen oder außerhalb einer Zelle, aber nah an einer solchen interessiert ist, wird er an einer Korrektur gerade dieser lokalen Bereiche interessiert sein. Eine solche Korrektur kann er erhalten, indem für den lokalen Teilbereich eine gesonderte Korrektur, ggf. additiv zu einer globalen Korrektur, durchgeführt wird, für die gesonderte Einstellparameter einer Aberrationskorrekturfunktion bestimmt werden. In vielen Fällen kann es aber ausreichen, dass für einen größeren Teilbereich Einstellparameter derart festgelegt werden, dass die Bildqualität gerade in den den Nutzer besonders interessierenden Bereichen besonders gut ist.

In obigen Abschnitten wurde in einigen Passagen zugrunde gelegt, dass Einstellparameter anhand von Schnittbildern der zu untersuchenden Probe, die zudem zu Schnittebenen gehören, die der Nutzer mikroskopisch untersuchen möchte, bestimmt werden. Diese Art der Bestimmung der Einstellparameter hat viele Vorteile, z.B. die oben jeweils geschilderten. Sie hat aber den Nachteil, dass mindestens Teilbereiche der mikroskopisch zu untersuchenden Probe schon vor der mikroskopischen Untersuchung mit Anregungslicht beaufschlagt und somit gebleicht werden. Dies kann in vielen Fällen vermieden werden, nämlich dann, wenn die Probe in lateraler Richtung hinreichend homogen ist. Diese Bedingung ist vielfach erfüllt, da in vielen Fällen die wesentlichen Aberrationen durch eine Fehlanpassung des Brechungsindex' der Probe an den des Immersionsmediums hervorgerufen werden. Eine solche Fehlanpassung hängt häufig nicht von der lateralen Position ab. Eine weitere Quelle von Aberrationen, die ebenfalls nicht von der lateralen Position abhängt, ist z.B. ein nicht korrekt gewählter oder bestimmter Brechungsindex des Immersionsmediums selbst, insbesondere auch infolge einer vom Sollwert abweichenden Umgebungstemperatur, oder aber eine Fehlanpassung einer Deckglasdicke. Sollen solche Aberrationen korrigiert werden, ist es vorteilhaft, die Schnittebene oder die Schnittebenen, anhand derer die Einstellparameter bestimmt werden, in einen Probenbereich oder in Probenbereiche zu legen, die lateral außerhalb des interessierenden Bereichs liegen. Das Verfahren kann im Übrigen so ausgeführt werden, wie weiter oben dargelegt, es kann z.B. vorteilhaft eine Schnittebene oder eine Menge von Schnittebenen abgebildet werden, die zwar lateral außerhalb des interessierenden Bereichs, diesem aber nah benachbart liegen; weiter können mit Vorteil jeweils eine oder mehrere Schnittebenen gewählt werden, die jeweils in lateraler Richtung parallel oder tangential zu Rändern oder parallel zu Tangenten an die Ränder orientiert sind.

Es ist auch möglich, an Stelle von einer oder mehreren Schnittebenen eine nicht-ebene Schnittfläche zu wählen, z.B. eine solche, die lateral außerhalb eines interessierenden Bereichs parallel zu einer Berandung des interessierenden Bereichs verläuft. Es ist natürlich auch möglich mehrerer solcher Schnittflächen zu wählen. Bei der Auswertung der Schnittbilder ist dann zu beachten, dass abhängig von der Krümmung, ggf. der lokal unterschiedlichen Krümmung, der Schnittfläche abgebildete Strukturen verzeichnet erscheinen sowie dass beispielsweise in einer ebenen Darstellung der Bilddaten Bildpunkte in einer Ebene dargestellt werden, die zu Objektpunkten gehören, die gerade nicht in einer Ebene liegen. Trotzdem kann ein solches Vorgehen sinnvoll und vorteilhaft sein, weil so Unterschiede in der Aberration in einem den interessierenden Bereich umgrenzenden Bereich in einem Bild erkennbar werden; liegen keine Unterschiede vor, kann auch dies in einem Bild erkannt werden.

Wie sowohl im Stand der Technik als auch in dieser Patentanmeldung mehrfach erwähnt, ist eine wesentliche Ursache von Aberrationen eine Fehlanpassung von Brechungsindizes. Für diese gilt, dass die zugehörigen Aberrationen durch eine Summe radialsymmetrischer Zernike-Polynome gerader Ordnung darstellbar sind, d. h. dass sie aus einer Defokussierung und einer Summe der sphärischen Aberrationen aller möglichen Ordnungen, in der Folge letztere Summe insgesamt als sphärische Aberrationen bezeichnet, zusammengesetzt sind. Dies gilt etwas allgemeiner in dem Sinne, dass jeweils bei einem Übergang von einem ersten Medium in ein zweites Medium mit einem anderen Brechungsindex eine Defokussierung und sphärische Aberrationen eingeführt werden. Die Stärke sowohl der Defokussierung als auch der sphärischen Aberrationen nimmt mit dem Abstand der Solllage eines Fokuspunktes im zweiten Medium von der Grenzfläche der beiden Medien zu, d. h. wird ein Objektiv so eingestellt, dass es in einem einheitlichen Medium einen Fokus in einem ersten axialen Abstand vom Ort, an dem im nicht-einheitlichen Medium eine Grenzfläche liegt, erzeugt, so erzeugt es bei Vorliegen der Grenzfläche einen aberrierten Fokus, der in einem Abstand von der Grenzfläche liegt, der sich multiplikativ aus dem ersten axialen Abstand und einer Konstanten ergibt. Auch die Stärke der sphärischen Aberrationen ergibt sich aus dem Abstand und, jedenfalls bei geeigneter Normierung bzw. Darstellung der betreffenden Zernike-Polynome, derselben Konstante. Kommt nun an einem Übergang in ein drittes Medium eine zweite Grenzschicht hinzu, gilt im Dritten Medium dasselbe wie im zweiten, wobei die bis zur zweiten Grenzschicht eingeführte Defokussierung und die eingeführten sphärischen Aberrationen vorhanden bleiben. Die Gesamtdefokussierung und die gesamten sphärischen Aberrationen, die im dritten Medium auftreten, setzen sich daher additiv aus den bis an die zweite Grenzschicht eingeführten Aberrationen und Aberrationen, die sich multiplikativ aus einer weiteren Konstante und dem Abstand zur zweiten Grenzschicht ergeben. Die hier genannte Konstante wird im Folgenden als Aberrationskorrektursteigung bezeichnet. Entsprechende Zusammenhänge gelten für folgende Schichten mit abweichenden Brechungsindizes.

Hieraus ergibt sich, dass eine Aberrationskorrekturfunktion zur Korrektur der Defokussierung und/oder der sphärischen Aberrationen zu einem Bereich mit einem in axialer Richtung homogenen Brechungsindex, wie im Stand der Technik z.B. in EP 2 770 360 A2 vorgeschlagen, aus Korrekturwerten zu zwei axialen Positionen innerhalb des homogenen Bereichs gewonnen werden kann. Bei dem Verfahren nach dem Stand der Technik wird letztlich die oben genannte Aberrationskorrektursteigung aus zwei Aberrationskorrekturwerten zu axial beabstandeten Fokuslagen bestimmt. Einer der beiden Aberrationskorrekturwerte kann als Aberrationskorrektur-Offset-Wert betrachtet werden.

Für den allgemeinen Fall, dass sich der Brechungsindex der Probe in axialer Richtung nicht in Sprüngen an Grenzschichten ändert oder im Falle, dass die einzelnen Schichten mit konstantem Brechungsindex sehr dünn sind, ergibt sich die notwendige Aberrationskorrektur für die Defokussierung und/oder die sphärischen Aberrationen aus einem Integral über die gesamte Dicke bis zur Fokuslage unter Berücksichtigung des jeweils axial lokal vorliegenden Brechungsindex'. Ändert sich der Brechungsindex beispielsweise linear mit der axialen Lage, so ändert sich die Größe der notwendigen Korrektur der sphärischen Aberration und des Defokus entsprechend einer quadratischen Funktion. Für diesen letztgenannten Fall kann eine gute Korrektur der Defokussierung und/oder der sphärischen Aberrationen auf Grundlage einer Aberrationskorrekturfunktion mit drei Einstellparametern erhalten werden. Gemäß Stand der Technik kann eine solche dreiparametrige Korrekturfunktion aus Korrekturwerten zu mindestens drei zur optischen Achse senkrecht orientierten Ebenen erhalten werden.

Gemäß erfindungsgemäßem Verfahren wird nun nicht eine Aberrationskorrektursteigung sowie eine Aberrationskorrekturfunktion insgesamt aus Korrekturwerten zu zwei axial beabstandeten Fokuslagen bestimmt und auch nicht eine dreiparametrige Funktion aus Korrekturwerten zu mindestens drei axial beabstandeten Fokuslagen. Wie oben geschrieben, werden Schnittbilder zu Schnittflächen, in vielen Fällen zu Schnittebenen, die parallel zur optischen Achse ausgerichtet sind aufgenommen. Für eine erste Aufnahme können anfängliche Aberrationskorrektur-Offset-Werte und eine Aberrationskorrektursteigung angenommen werden. Die anfänglichen Werte können dabei auf Basis von Informationen über das Immersionsmedium, ggf. über das Deckglas und insbesondere über das Einbettmedium der Probe bestimmt werden. Die anfänglichen Werte können dabei auch einzeln oder gemeinsam auf den Wert 0 (null) gesetzt werden. Der Aberrationskorrektur-Offset-Wert wirkt sich dabei unmittelbar und unabhängig vom Wert der Aberrationskorrektursteigung auf die Korrektur der Aberrationen in einer festen, senkrecht zur optischen Achse orientierten ersten Ebene der Probe aus. Mittelbar bzw. additiv wirkt er sich auf die Aberrationskorrektur in allen weiteren senkrecht zur optischen Achse orientierten Ebenen aus. Diese erste Ebene kann z.B. die Ebene der Grenzschicht zwischen Deckglas und Probe sein, sie kann aber auch eine beliebige, frei wählbare Bezugsebene sein. Bevorzugt schneidet diese Bezugsebene aber die optische Achse innerhalb des axialen Bereichs, für den eine Aberrationskorrektur durchgeführt werden soll. Der Wert für die Aberrationskorrektursteigung wirkt sich in allen Ebenen, die senkrecht zur optischen Achse orientiert sind, außer in der oben genannten Bezugsebene aus, wobei die Auswirkung linear mit dem Abstand zur Bezugsebene zunimmt. Das in diesem Abschnitt Gesagte gilt mit Blick auf die Korrektur von Defokus und/oder sphärischen Aberrationen, nicht oder jedenfalls nicht zwingend für eine Korrektur anderer Aberrationen.

Wie schon weiter oben dargelegt, kann dieses Verfahren auch auf mehrere axiale Teilbereiche einzeln angewendet werden, sodass im Ergebnis eine stückweise lineare Korrekturfunktion erhalten wird. In vielen Fällen wird dies notwendig, aber auch ausreichend sein.

Für eine erste Aufnahme können auch drei anfängliche Einstellparameter einer dreiparametrigen, beispielsweise quadratischen Aberrationskorrekturfunktion zur Korrektur von Defokus und/oder sphärischen Aberrationen angenommen werden. Einer dieser Einstellparameter kann auch hier die Funktion eines Aberrationskorrektur-Offset-Werts haben, die beiden anderen Einstellparameter wirken sich auf die Änderung der Aberrationskorrekturfunktion mit der Tiefe, d. h. der z-Position in der Probe, aus, wobei der dritte Einstellparameter sich insbesondere auf die Krümmung der Änderung auswirken kann. Die Bestimmung und Anwendung einer solchen Korrekturfunktion kann beispielsweise dann sinnvoll sein, wenn in der Probe ein Temperaturgradient ausgebildet ist und während der Beobachtung erhalten bleibt. Dies ist z.B. dann möglich, wenn zwischen den Temperaturen von Objektiv und Probenträger eine Differenz besteht. Der Brechungsindex eines Mediums hängt in der Regel stetig und monoton mit der Temperatur zusammen, sodass ein solcher Temperaturgradient einen korrespondierenden Gradienten des Brechungsindex' zur Folge haben kann, sodass dann der Verlauf des Brechungsindex durch eine lineare Funktion zumindest angenähert werden kann. Auch hier können die finalen Einstell- oder Korrekturparameter automatisch oder anhand visueller Inspektion bestimmt werden.

Grundsätzlich ist es auch möglich, mit dem erfindungsgemäßen Verfahren Korrekturfunktionen zur Korrektur von Defokus und/oder sphärischen Aberrationen mit vier oder mehr Einstellparametern zu bestimmen. Je mehr Einstellparameter zu finden sind, umso schwieriger wird allerdings das Finden der zur Korrektur benötigten Einstellparameter der Korrekturfunktion. Das hat zur Folge, dass z.B. bei Proben mit komplexerer Schichtung des Brechungsindex' es schließlich besser sein kann, eine stückweise lineare Korrekturfunktion zu bestimmen.

Mit Blick auf die sphärischen Aberrationen ist festzustellen, dass der Einfluss auf die Bildqualität mit zunehmender Ordnung der sphärischen Aberrationen abnimmt. In der Praxis kann es daher ausreichen, wenn tatsächlich nicht bzgl. aller Ordnungen eine Korrektur durchgeführt wird, sondern nur bzgl. der kleineren Ordnungen. Im Folgenden wird dennoch von Summe sphärischer Aberrationen gesprochen, da diese Summe durch eine Summe von Zernike-Polynomen kleinerer Ordnungen sowie schon durch das Zernike-Polynom, welches die sphärische Aberration erster Ordnung beschreibt, angenähert beschrieben wird.

Es müssen nun bei etwas idealisierter Betrachtung zwei Fälle unterschieden werden. Im ersten Fall korrigiert die Korrektureinrichtung von den gesamten durch radialsymmetrische Zernike-Polynome gerader Ordnung beschreibbaren Aberrationen nur die sphärischen Aberrationen und nicht den Defokus; eine zusätzliche Korrektur anderer Aberrationen als sphärischer Aberrationen oder Defokus ist auch in diesem Fall möglich. Entscheidend für die Charakterisierung dieses Falls ist, dass ein Defokus von der Korrektureinrichtung gerade nicht korrigiert wird. In diesem Fall führt eine erfolgreiche Korrektur dazu, dass ein nicht-aberrierter Fokus ausgebildet wird, dessen Ort gegenüber der Lage, die er ohne Vorhandensein der Fehlanpassung bzw. einer Grenzschicht hätte, verlagert ist, wobei der Grad der Verlagerung von der axialen Lage des Fokus' abhängt. Man erhält in diesem Fall bei Anwendung der Korrektur Datensätze, die abhängig vom Wert der Aberrationskorrektursteigung verzeichnet sind. Da andererseits die Aberrationskorrektursteigung als Einstellparameter erhalten wird, kann diese Verzeichnung korrigiert werden. Der Vorteil dieses Verfahrens ist, dass die notwendige Beeinflussung der Wellenfront durch die Korrektureinrichtung insgesamt kleiner ist als wenn auch der Defokus korrigiert wird. Wird als Korrektureinrichtung beispielsweise ein deformierbarer Spiegel, der einen begrenzten Hub aufweist, verwendet, kann bei Anwendung dieses Verfahrens trotz des begrenzten Hubs eine Aberrationskorrektur auch für große Dicken der Probe und/oder für große Fehlanpassungen der Brechungsindizes durchgeführt werden. Außerdem hat dieses Verfahren den Vorteil, dass sich der Aberrations-Offset-Wert direkt auf die Bildqualität bei einer festen axialen Lage sowohl bzgl. der Probe als auch bzgl. des Bilds auswirkt.

Im zweiten Fall korrigiert die Korrektureinrichtung die gesamten durch radialsymmetrische Zernike-Polynome gerader Ordnung beschreibbaren Aberrationen, also auch den Defokus; eine zusätzliche Korrektur anderer Aberrationen als sphärischer Aberrationen oder Defokus ist auch in diesem Fall möglich. Dies führt dazu, dass bei erfolgreicher Korrektur ein nicht-aberrierter Fokus ausgebildet wird, dessen Ort gegenüber der Lage, die er ohne Vorhandensein der Fehlanpassung bzw. einer Grenzschicht hätte, gerade nicht verlagert ist. Da aber ohne Korrektur sowie im Falle einer unzureichenden Korrektur der Fokus verlagert ist, führt die Anwendung dieses Verfahrens dazu, dass während der Durchführung, insbesondere zwischen der ersten Schnittbildaufnahme und der letzten vor der Festlegung der finalen Einstellparameter, in den Bildern enthaltene Strukturen zueinander verlagert erscheinen. Dieses Verfahren hat den Vorteil, dass von vornherein unverzeichnete Bilder erhalten werden. Es hat den Nachteil, dass die notwendige Beeinflussung der Wellenfront durch die Korrektureinrichtung insgesamt größer ist, als wenn der Defokus nicht korrigiert wird. Wird als Korrektureinrichtung beispielsweise ein deformierbarer Spiegel, der einen begrenzten Hub aufweist, verwendet, kann bei Anwendung dieses Verfahrens der begrenzte Hub eine Aberrationskorrektur für große Dicken der Probe und/oder für große Fehlanpassungen der Brechungsindizes unmöglich machen. Ein weiterer Nachteil kann sich dann ergeben, wenn die Vorrichtung, die als Korrektureinrichtung verwendet wird, nicht nur zur Korrektur der Aberrationen, sondern auch zur Änderung der Fokuslage, d. h. zum Abtasten der Probe in axialer Richtung genutzt werden soll, da hier der Hub des deformierbaren Spiegels ggf. schon für die Veränderung der Fokuslage benötigt werden kann.

Mit Blick auf beiden Fälle ist Folgendes zu bemerken: Erfolgt eine Änderung der Fokuslage durch eine Verlagerung des Objektivs relativ zur Probe, wie dies in vielen Anwendungsfällen der Fall sein wird, so führt diese Verlagerung nicht nur zu einer Änderung der Lage des Fokuspunktes relativ zu einer Grenzschicht oder einer Bezugsebene, sondern auch zu einerÄnderung der Dicke der Schicht des Immersionsmediums, die durchstrahlt wird. Dies wirkt sich auf die grundsätzliche Anwendbarkeit des Verfahrens jedoch nicht aus. Denn der Aberrationskorrektur-Offset-Wert gehört zu einer festen Position des Objektivs, und die zur Korrektur notwendige Aberrationskorrektursteigung hängt nach wie vor linear von der axialen Lage des Fokus' in der Probe ab. Diese Steigung ergibt sich aus der Überlagerung zweier linearer Beziehungen, da sich ja auch der Einfluss des Immersionsmediums linear mit der Dicke und somit linear mit der Fokuslage ändert. Entsprechend ist auch die Bestimmung einer dreiparametrigen Aberrationskorrekturfunktion, wie sie im Falle der Ausbildung eines Brechungsindexgradienten in der Probe sinnvoll sein kann, oder auch die Bestimmung einer vierparametrigen Aberrationskorrekturfunktion oder einer solchen mit mehr als vier Einstellparametern möglich.

In der praktischen Anwendung ist die eindeutige Trennung von der Korrektur sphärischer Aberrationen von der Defokus-Korrektur mit etwas Aufwand verbunden, aber möglich, wie beispielsweise in siehe Travis J. Gould et al., "Adaptive optics enables 3D STED microscopy in aberrating specimens", OPTICS EXPRESS, Vol. 20, No. 19, 20998-21009 (2012), dargelegt ist.

Wichtiger ist im Zusammenhang mit dieser Erfindung insbesondere aber die experimentell gewonnene Erkenntnis, dass eine gute Korrektur sphärischer Aberrationen und eine gute Bildqualität auch dann möglich sind, wenn mangels durchgeführter Kalibrierung in Kauf genommen werden muss, dass eine Aberrationskorrektur zu einer Verlagerung des Fokus führt. Damit sind zwar Verzeichnungen der Abbildung verbunden, die aber die Bildschärfe und Bildhelligkeit nicht mindern.

Wie mehrfach erwähnt, können auch andere Aberrationen als sphärische oder ein Defokus mit dem erfindungsgemäßen Verfahren korrigiert werden. Werden solche Aberrationen nicht durch lokale Strukturen hervorgerufen, sondern z.B. durch eine Verformung des Deckglases oder Ähnliches, so werden sich diese Aberrationen in der ganzen Probe auswirken, wobei auch hier eine Abhängigkeit der Lage von der axialen Position, hier ggf. zusätzlich auch eine Abhängigkeit von der lateralen Position vorliegen wird. Derartige Aberrationen können erkannt und identifiziert werden anhand von Verformungen von Strukturen bekannter Form in den Bildern. Dies gilt zunächst einmal für eine Verformung in Bildern zu senkrecht zur optischen Achse ausgerichteten Bildebenen. Beispielsweise Astigmatismus führt aber auch zu einer Verzeichnung entlang der optischen Achse des Objektivs, d. h. zu einer Verzeichnung in Schnittbildern zu Ebenen, die parallel zur optischen Achse ausgerichtet sind. Es ist daher grundsätzlich möglich, die Aberrationskorrekturfunktion um Terme zu ergänzen, die sich auf eine Korrektur weiterer Aberrationen richten, und mit dem erfindungsgemäßen Verfahren zugehörige Einstellparameter zu bestimmen.

Eine solche Erweiterung ist insbesondere auch geeignet für eine Korrektur von Aberrationen, die von lokalen Strukturen verursacht werden. Hierzu finden sich auch an anderer Stelle bereits entsprechende Ausführungen.

Für die Anwendung des erfindungsgemäßen Verfahrens unter Nutzung einer visuellen Inspektion können dem Benutzer Einstellelemente dargeboten werden, beispielsweise auf einem Bildschirm als Schieberegler, die dann beispielsweise mittels Nutzung einer Computer-Maus einstellbar sind. Um ausschließlich sphärische Aberrationen und ggf. auch den Defokus zu korrigieren, werden lediglich zwei Einstellelemente benötigt. Sollen sphärische Aberrationen und ggf. auch ein Defokus, die durch einen Gradienten des Brechungsindex' hervorgerufen werden, korrigiert werden, so wird ein drittes Einstellelement benötigt.

Bevorzugt werden einem Nutzer jeweils nicht nur Schnittbilder aus einem Schritt der Iteration dargeboten, sondern Schnittbilder aufeinanderfolgender Iterationsschritte, sodass der Nutzer durch Vergleich feststellen kann, ob eine Festlegung neuer Einstellparameter und deren Anwendung zu einer Verbesserung der Aberrationskorrektur gegenüber im früheren Schritt angewendeten geführt hat oder nicht. Er kann dann weiter leicht erkennen, ob beispielsweise in einem axialen Teilbereich eine Verbesserung eingetreten ist und in einem anderen nicht. Ist zum Beispiel in einem mittleren axialen Bereich eine gute Korrektur erfolgt und oberhalb und unterhalb nicht, so kann der Nutzer beispielsweise insbesondere für die Aberrationskorrektursteigung einen neuen Wert festlegen. Durch Vergleich von Bildern zu unterschiedlichen Aberrationskorrektursteigungen, aber identischen Aberrationskorrektur-Offset-Werten, kann der Nutzer erschließen, wo jeweils die Bezugsebene liegt.

Das Verfahren kann ebenso automatisiert durchgeführt werden. Soweit Schnittbilder von Ebenen genutzt werden, kann zur Bewertung der Bildqualität jedes Gütekriterium genutzt werden, welches auch zur Bewertung der Qualität von Schnittbildern zu Ebenen, die senkrecht zur optischen Achse orientiert sind, geeignet ist. Aus dem Stand der Technik ist es zum Beispiel bekannt, die Bildhelligkeit oder den Bildkontrast zu nutzen. Iterative Verfahren zur Anwendung solcher Gütekriterien, die selbst dann das Finden einer guten Einstellung ermöglichen, wenn das Kriterium als solches nicht erlaubt, zu entscheiden, in welchem Sinne, d. h. ob auf einen größeren oder einen kleineren Wert ein Korrekturparameter geändert werden muss, sind ebenfalls im Stand der Technik bekannt.

Das Verfahren kann vorteilhaft angewendet werden in der konfokalen Fluoreszenzmikroskopie unter Nutzung eines konfokalen Fluoreszenzmikroskops. Zu dieser gehören Verfahren, bei denen die Anregung durch Einphotonenabsorption erfolgt. Die Fluoreszenzemission erfolgt dann bei einer größeren Wellenlänge als der Anregungswellenlänge, wobei sich Emissionswellenlänge und Anregungswellenlänge nur wenig unterscheiden. Für diese Art der Fluoreszenzmikroskopie werden achromatische Objektive, d. h. solche Objektive, die hinsichtlich ihrer Farblängs- und Farbquerfehler zwischen typischen Anregungs- und Emissionswellenlängen gut korrigiert sind, angeboten und typischerweise genutzt. Im Falle der konfokalen Fluoreszenzmikroskopie im Auflicht führt daher eine Korrektur, die die Aberrationen des Anregungslichtstrahls gut korrigiert, in entsprechender Weise zu einer guten Korrektur der Aberrationen des Detektions- oder Emissionslichts. Verfahren zur Justage eines Detektionsstrahlengangs zur konfokalen Detektion relativ zu einem in die Probe fokussierten Anregungslichtstrahls sind bekannt. Sie können grundsätzlich auch bei Vorliegen von Aberrationen in beiden Strahlengängen angewendet werden. Die Durchführung einer solchen Justage wird hier vorausgesetzt.

Bei der Durchführung des erfindungsgemäßen Verfahrens bei Nutzung eines solchen konfokalen Fluoreszenzmikroskops gilt nun Folgendes: Erfolgt die Beleuchtung schlecht korrigiert, so ist der Bereich in der Fokalebene, in dem Fluoreszenz angeregt wird, groß, während die Anregungsintensität vergleichsweise gering ist. Eine schlechte Korrektur im Anregungsstrahlengang führt daher zu kontrastarmen und unschärferen Bildern. Dies gilt jedenfalls solange, wie die Fokuslagen für Anregung und Detektion exakt oder in guter Näherung aufeinanderfallen. Diese Bedingung wird erfüllt, wenn ein achromatisches Objektiv verwendet wird und wenn gleichzeitig die Einstellparameter der Aberrationskorrekturfunktion auch auf eine Korrektureinrichtung im Detektionsstrahlengang angewendet werden. In besonders einfacher Weise wird die Anwendung derselben Korrekturparameter in beiden Strahlengängen erreicht, indem in beiden Lichtpfaden ein und dieselbe Korrektureinrichtung genutzt wird, d. h. in dem die Korrektureinrichtung in einem gemeinsamen Anregungs- und Detektionspfad platziert wird. Für den Fall, dass die Korrektur der Farbfehler, insbesondere der Farblängsfehler zwischen Anregungs- und Detektionswellenlänge nicht hinreicht, so kann dieser Farblängsfehler vorab bestimmt werden. Zumindest für Proben, deren Brechungsindex nicht oder nur schwach von der Wellenlänge abhängt, ist es dann möglich, rechnerisch zu bestimmen, wie Anregungspfad und Detektionspfad mit der axialen Lage eines Fokuspunktes in der Probe relativ zueinander korrigiert werden müssen, um dafür zu sorgen, dass Anregungs- und Detektionsfokus aufeinanderfallen. Es kann dann jeweils abhängig von der Festlegung der Einstellparameter der Aberrationskorrekturfunktion für den Anregungspfad eine korrespondierende Einstellung einer Korrektureinrichtung im Detektionspfad gewählt werden; sofern im gemeinsamen Anregungs- und Detektionspfad eine gemeinsame Korrektureinrichtung platziert ist, ist dann zusätzlich in ausschließlich einem der Pfade, bevorzugt ausschließlich im Detektionspfad, eine weitere Korrektureinrichtung zu platzieren, welche derart korrespondierend eingestellt wird, dass es die aufgrund des Farbfehlers notwendige Restkorrektur durchführt. Im Regelfall wird es im Rahmen der konfokalen Fluoreszenzmikroskopie aber ausreichen, dieselbe Einstellung oder dieselbe Korrektureinrichtung in Anregungs- und Detektionspfad zu nutzen. Es ist zwar denkbar und wahrscheinlich, dass auch die Auswirkung der Intensitätsverteilungen über den jeweiligen Strahlquerschnitt auf die Aberrationskorrektur zu Abweichungen zwischen den Güten der Anregungskorrektur und der Detektionskorrektur führt, die bisherigen experimentellen Befunde zeigen aber, dass diese nicht wesentlich sind.

Das Verfahren kann außerdem vorteilhaft angewendet werden in der STED-Mikroskopie (STED: stimulated emission depletion) sowie in weiteren superauflösenden Mikroskopieverfahren, d. h. Nanoskopieverfahren, in denen eine Art von Ausschaltlicht oder Fluoreszenzverhinderungslicht angewendet wird, welches sicherstellt, dass Fluoreszenz nur aus einem kleineren Ortsbereich um einen Fokuspunkt herum als ein beugungsbegrenzter gewöhnlicher Anregungsspot groß ist, emittiert werden kann. Ohne Einschränkung der Allgemeinheit wird im Folgenden durchgängig auf die STED-Mikroskopie, bei der das Ausschalt- oder Fluoreszenzverhinderungslicht ein sogenanntes Depletionslicht ist, Bezug genommen. Bei der Anwendung der STED-Mikroskopie ist die Wellenlänge des Depletionslichts in vielen Fällen nur etwas größer als die der Fluoreszenzemission. Üblicherweise werden Objektive verwendet, die für den gesamten Bereich von Anregungs- bis Depletionswellenlänge gut bzgl. der Farbfehler korrigiert sind. Daraus folgt, dass die Einstellparameter für die Aberrationskorrekturfunktion in guter Näherung auch für eine Aberrationskorrektur im Depletionsstrahlengang genutzt werden können. Es ist daher möglich, das erfindungsgemäße Verfahren durchzuführen, indem schon während des ggf. iterativen Prozesses zum Festlegen der Einstellparameter Anregungs- und Depletionslicht gemeinsam genutzt werden. Eine solche Nutzung der Einstellparameter in Anregungs- und Depletionslichtpfad ist am einfachsten dadurch zu realisieren, dass eine Korrektureinrichtung in einem gemeinsamen Lichtpfad platziert wird. Insgesamt am günstigsten ist es, eine Korrektureinrichtung in einem für Anregungslicht, Depletionslicht und Detektion gemeinsamen Pfad zu platzieren. Sowohl bzgl. der korrigierbaren Aberrationen, d. h. z.B. mit oder ohne Korrektur des Defokus`, bzgl. des Modells zu den sphärischen Aberrationen, der Ausführbarkeit mittels visueller Inspektion oder als automatisches Verfahren und bzgl. weiterer Aspekte wie z.B. der Möglichkeit, Farbfehler zwischen Anregung und Detektionswellenlänge zu kompensieren, gilt das weiter oben Gesagte auch für das Verfahren mit gemeinsamer Nutzung von Anregungs- und Depletionslicht. Es ist daher aber auch möglich, das erfindungsgemäße Verfahren zunächst mittels konfokaler Mikroskopie durchzuführen und anschließend die gewonnenen Einstellparameter auch auf den Depletionsstrahl anzuwenden. Letzteres ist jedenfalls dann bevorzugt, wenn die Einstellparameter anhand von Schnittbildern des interessierenden Bereichs der Probe, den der Nutzer mikroskopisch untersuchen möchte, erfolgt, da bei diesem letzteren Vorgehen die Probe nur mit Anregungslicht und nicht zusätzlich mit Depletionslicht beaufschlagt wird und somit weniger gebleicht wird.

Bei der STED-Mikroskopie ist aber weiter zu beachten, dass die Bildqualität, gemessen z.B. an Helligkeit, Kontrast und Bildschärfe, stärker von der Güte des Depletionsfokus' abhängt als von der Güte des Anregungsfokus. Weiter ist zu beachten, dass die Auflösung der STED-Mikrokopie deutlich höher ist als die der konfokalen Fluoreszenzmikroskopie. Dies bedeutet, dass eine Aberrationskorrektur, die ausreicht, eine hohe Bildqualität von mittels konfokaler Fluoreszenzmikroskopie sicherzustellen, nicht ausreichen muss, um eine hohe Qualität der STED-Bilder sicherzustellen. Dies bedeutet z.B., dass ein Farbfehler, der in der konfokalen Mikroskopie keine relevanten Auswirkungen hat, sich in der STED-Mikroskopie stark nachteilig auswirkt. Es ist daher sinnvoll, das erfindungsgemäße Verfahren unter Nutzung von Anregungs- und Depletionslicht zu nutzen, um Einstellparameter einer Aberrationskorrekturfunktion für eine Korrektureinrichtung, die auf den Depletionslichtstrahl, aber nicht auf den Detektionsstrahl wirkt, zu nutzen. Dies ist auch möglich und in vielen Fällen einfach zu realisieren. Im Stand der Technik sind nämlich bereits Mikroskope bekannt, bei denen die zur Ausbildung des STED-Fokus, z.B. eines Donuts, notwendige Wellenfrontformung durch einen verstellbaren Wellenfrontmodulator vorgenommen wird. Im Stand der Technik (siehe WO 2014 029978 A1) ist auch ein Verfahren bekannt, bei dem eine solche Korrektur anhand von Schnittbildern, die senkrecht zur optischen Achse orientiert sind, durchgeführt wird.

Bei der Durchführung des Verfahrens zur Bestimmung der Einstellparameter für eine Aberrationskorrekturfunktion für ausschließlich das Depletionslicht erfolgt - i) eine Aufnahme eines zu der optischen Achse eines Mikroskopobjektivs parallelen ersten Schnittbilds durch Abtasten einer Probe mit einer fokussierten Anregungslichtverteilung und einer derart fokussierten Depletionslichtverteilung, dass diese im Zentrum des Anregungsfokus ein lokales Minimum aufweist, in einer zu der optischen Achse des Mikroskopobjektivs parallelen Schnittfläche, wobei die Anregungslichtverteilung mittels einer einstellbaren Korrektureinrichtung gemäß finaler Einstellparameter einer Aberrationskorrekturfunktion korrigiert wird und wobei die Depletionslichtverteilung mittels einer einstellbaren Korrektureinrichtung gemäß anfänglicher Einstellparameter einer zusätzlichen Aberrationskorrekturfunktion für das Depletionslicht korrigiert wird, wobei zu jeder Abtastposition aus der Probe emittiertes Fluoreszenzlicht detektiert wird, oder einer ersten Mehrzahl solcher Schnittbilder, - ii) eine Auswertung des ersten Schnittbilds oder der ersten Mehrzahl solcher Schnittbilder, - iii) ein Festlegen neuer Einstellparameter der zusätzlichen Aberrationskorrekturfunktion.

Sofern schon in diesem Schritt finale Einstellparameter der zusätzlichen Aberrationskorrekturfunktion festgelegt werden können, erfolgt anschließend die Untersuchung der Probe oder einer anderen entsprechenden Probe mittels STED-Mikroskopie. Andernfalls werden zunächst die oben genannten Schritte wiederholt durchgeführt, wobei an die Stelle der anfänglichen Einstellparameter der zusätzlichen Aberrationskorrekturfunktion jeweils die neuen Einstellparameter treten, bis finale Einstellparameter festgelegt werden.

In der Regel wird bei der STED-Mikroskopie, soweit bei ihr die Anregung als Einphotonenanregung erfolgt, eine konfokale Detektion durchgeführt bspw. unter Nutzung einer konfokalen Blende. Vor der Bestimmung der Einstellparameter der zusätzlichen Aberrationskorrekturfunktion sollten daher die Einstellparameter der Aberrationskorrekturfunktion für das Anregungslicht und entsprechend das Detektionslicht bestimmt werden. Werden diese Einstellparameter angewendet, ist sichergestellt, dass Anregungsfokus und Detektionsfokus in allen axialen Lagen zusammenfallen. Bei der Bestimmung der Einstellparameter der zusätzlichen Aberrationskorrekturfunktion müssen nun, um den vollen Nutzen zu erhalten, sowohl ein Defokus relativ zu Anregungs- und insbesondere Detektionsfokus als auch sphärische Aberrationen korrigiert werden. Die zugehörigen Korrekturfunktionen können im Übrigen den weiter oben beschriebenen entsprechen, die zugehörigen Einstellparameter können entsprechend bestimmt werden.

Es kann aber auch ein Fall eintreten, bei dem Defokus und sphärische Aberrationen nicht in demselben Maße einer Korrektur unterworfen werden müssen, weil ja der Depletionsfokus auf den Detektionsfokus geschoben werden muss, der auch nach Korrektur nicht zwingend dort liegt, wo ein Depletionsfokus, der keine Aberrationen aufgeprägt bekommen hätte, liegen würde. Unter diesen Bedingungen kann dann die Bestimmung der Einstellparameter der zusätzlichen Aberrationskorrekturfunktion derart erfolgen, dass zunächst ausschließlich Einstellparameter für eine Korrektur des Defokus und nicht der sphärischen Aberrationen gesucht werden und erst anschließend andere Einstellparameter für eine Korrektur der sphärischen Aberrationen. Dies bedeutet, dass die Anzahl der Einstellparameter zur Korrektur der durch radialsymmetrische Zernike-Polynome gerader Ordnung darstellbaren Aberrationen verdoppelt werden muss oder jedenfalls, dass bei einer Verdoppelung der Zahl dieser Einstellparameter eine gute Korrektur erreicht werden kann. Denn auch wenn der Depletionsfokus aberriert ist, kann aus den Schnittbildern erkannt werden, wann der Defokus korrigiert ist, und wenn der Defokus korrigiert ist, kann aus den Schnittbildern erkannt werden, ob der Fokus aberriert oder korrigiert ist. So wird gleichsam zunächst für alle axialen Positionen ein schlechter Depletionsfokus an die richtige Stelle geschoben und dann folgend der an der richtigen Stelle platzierte Fokus verbessert. Dies ist unabhängig davon möglich, ob die Korrektureinrichtungen oder die Korrektureinrichtung für Anregungslicht und Detektionslicht den jeweiligen Defokus korrigiert oder nicht. Auch im Fall, dass eine strenge Trennung zwischen Defokus-Korrektur und Korrektur sphärischer Aberrationen nicht möglich ist, weil die dafür notwendige Kalibrierung oder Modellbildung nicht durchgeführt wurde, kann zumindest iterativ eine gute Korrektur erreicht werden, da im Regelfall bei Anwendung der vorher gewonnenen Korrekturparameter für die Aberrationskorrekturfunktion des Anregungslichts auf den Depletionsstrahl der Fokus nur schwach verschoben und schwach aberriert sein wird.

Das Verfahren kann außerdem vorteilhaft angewendet werden in der Mehrphotonenfluoreszenzmikroskopie. Wird diese an dicken Proben durchgeführt, so wird in der Regel nicht konfokal detektiert. Die Bildqualität hängt dann ausschließlich oder jedenfalls bei weitem überwiegend von der Qualität des Anregungsfokus ab. Das erfindungsgemäße Verfahren kann insoweit im Wesentlichen in derselben Art und Weise umgesetzt werden wie bei der Anwendung in der konfokalen Fluoreszenzmikroskopie, wobei die Notwendigkeit wegfällt, eine Aberrationskorrektur für den Detektionspfad durchzuführen. Insofern sind Farbfehler zwischen Anregungswellenlänge und Detektionswellenlänge im Regelfall unkritisch. In besonderen Fällen erfolgt allerdings auch in der Mehrphotonenfluoreszenzmikroskopie die Detektion konfokal bzw. mit einem in einer konfokalen Ebene gelegenen ortsauflösendem Detektor. In solchen Fällen kann beispielsweise zunächst die Bestimmung der Einstellparameter der Aberrationskorrekturfunktion für das Anregungslicht bei entfernter oder vollständig geöffneter konfokaler Blende erfolgen und anschließend eine Bestimmung der Einstellparameter einer weiteren Aberrationskorrekturfunktion für den Detektionsstrahlengang.

Die Erfindung kann grundsätzlich auch angewendet werden bei solcher Mikroskopie, bei der Mehrphotonenanregung mit der Anwendung von Depletionslicht kombiniert wird.

Sie kann weiter angewendet werden, um die MINFLUX-Mikroskopie zu verbessern. Hier ist das Verfahren zum Finden der Einstellparameter unter Nutzung der MINFLUX-Anregungswellenlänge und der Durchführung einer gewöhnlichen konfokalen Bildgebung durchzuführen. Die hieraus erhalten Einstellparameter der Aberrationskorrekturfunktion sind dann bei Durchführung des MINFLUX-Verfahrens anzuwenden.

Eine weitere Verbesserung der fluoreszenzmikroskopischen Bildaufnahme dreidimensionaler Bilder wird erreicht, indem nacheinander eine Vielzahl senkrecht orientierter, d. h. zur optischen Achse des Mikroskopobjektivs paralleler, und zueinander paralleler Schnittbilder, der Probe aufgenommen werden, wobei die Bildebenen in einer Richtung senkrecht zur optischen Achse voneinander beabstandet sind. Ein Volumendatensatz ergibt sich dann aus dem Stapel der senkrecht orientierten Schnittbilder. Diese Art der Bilddatengewinnung hat gegenüber der Gewinnung eines Volumendatensatzes als Stapel horizontal orientierter Schnittbilder den Vorteil, dass die Bilddaten geringere Gradienten der lokal gemittelten Bildhelligkeiten in Richtung der optischen Achse aufweisen. Dies hat seine Ursache darin, dass die senkrecht zur optischen Achse orientierten, d. h. horizontal orientierten Ebenen bei Anwendung dieser Art der Bilddatengewinnung bis zu dem Zeitpunkt, zu dem zu einem Probenteilvolumen einer solchen Ebene Bilddaten gewonnen werden, im Verhältnis zueinander gleichmäßiger gebleicht werden. Werden nämlich horizontal orientierte Bilder aufgenommen und zu einem Bildstapel zusammengesetzt, so werden die Teilvolumina der ersten Ebene, zu der Bilddaten aufgenommen werden, ohne Einschränkung der Allgemeinheit hier als oberste Ebene bezeichnet, bis zum Zeitpunkt der Bilddatengewinnung nicht oder nur sehr wenig gebleicht, während die Teilvolumina der folgenden Ebenen bei Aufnahme aller vorangehenden Ebenen gebleicht werden. Da der Anregungsstrahl vor und nach dem Fokuspunkt weiter ausgedehnt ist als im Fokus, bleicht ein Anregungslichtstahl nicht nur Fluorophore auf der Achse des Anregungsstrahls, sondern auch in einem sich in etwa kegelförmig entlang der Achse erstreckenden Bereich. Bis zu dem Zeitpunkt, zu dem Bilddaten zu einem Volumen inmitten der hier als unterste bezeichneten Bildebene gewonnen werden, ist dieses Volumen daher durch Lichtstrahlen gebleicht worden, die zur Datengewinnung oberhalb auf der optischen Achse und diese herum gelegener Bildpunkte genutzt wurden. Demgegenüber wird dasselbe Volumen bei Aufnahme senkrecht orientierter Bildebenen durch Abtasten entlang horizontaler Linien und jeweils folgendem axialen Vorschub bis zum Zeitpunkt der Datengewinnung nur durch Lichtstrahlen gebleicht, die zur Datengewinnung zu Volumina, die oberhalb oder entlang der Richtung der senkrecht orientierten Bildebenen benachbart liegen oder in Richtung senkrecht zu den senkrecht orientierten Bildebenen zu solchen Ebenen gehören, zu denen zeitlich früher Bilddaten aufgenommen wurden. Lichtstrahlen, die zu später aufgenommenen senkrecht orientierten Ebenen gehören, tragen bis zum Zeitpunkt der Datengewinnung nicht zum Bleichen bei. Für die Bildgewinnung in den oberen Ebenen gilt Umgekehrtes, d. h. inmitten einer oberen Ebene gelegene Teilvolumina werden vor dem Zeitpunkt der Datengewinnung stärker gebleicht als bei einer Gewinnung von Volumendatensätzen aus einem Stapel horizontal orientierter Bilder. Insgesamt ergibt sich so ein geringerer Gradient der lokal gemittelten Bildhelligkeiten in Richtung der optischen Achse, d. h. eine bessere Homogenität der Bildhelligkeit.

Eine noch bessere Homogenität wird erreicht, wenn die Reihenfolge der Abtastschritte bei der Gewinnung der senkrecht orientierten Bilder in dem Sinne vertauscht wird, dass jeweils zunächst Bilddaten zu Volumina entlang der optischen Achse aufgenommen werden, also entlang der optischen Achse abgetastet wird, gefolgt jeweils von einem horizontalen Abtastschritt. Dies reduziert die Lichtmenge, die ein unten liegendes Teilvolumen erreicht, bevor zu diesem Teilvolumen Bilddaten gewonnen werden, weiter.

Diese Art der Bildaufnahme entfaltet ihren vollen Vorteil in Verbindung mit einer weiter unten beschriebenen erfindungsgemäßen Vorrichtung. Eine besonders hohe Qualität der dreidimensionalen Bilddatensätze oder Volumenbilder wird erreicht, wenn diese Art der Bildaufnahme angewendet wird, nachdem mit dem erfindungsgemäßen Verfahren die Einstellparameter für die Korrektureinrichtung bestimmt worden sind. Tatsächlich kann aber diese Art der Bildaufnahme auch unabhängig von dem Verfahren, mit dem die Einstellparameter einer Korrektureinrichtung bestimmt werden oder worden sind oder sogar unabhängig von dem Vorliegen einer Korrektureinrichtung vorteilhaft eingesetzt werden. Dieses Verfahren, mit dem die Homogenität der Bildhelligkeit in axialer Richtung verbessert wird, ist somit auch unabhängig von der hier beanspruchten Erfindung anwendbar, sie stellt auch eigenständig eine erfinderische Lösung dar.

Die obige Beschreibung geht an einigen Stellen, insbesondere dort, wo Bezug auf Richtungen von Detektionspfad und Beleuchtungspfad genommen wird, von der Situation aus, dass Anregung und Detektion durch dasselbe Objektiv erfolgen, d. h. dass eine Auflichtbeleuchtung genutzt wird. Hierdurch soll die Erfindung nicht beschränkt werden. Sie ist vielmehr auch anwendbar, wenn eine Durchlichtanordnung genutzt wird oder z.B. ein 4-Pi-Mikroskop, z.B. eines, bei dem zwei einander gegenüberliegende Objektive für Beleuchtung und Detektion genutzt werden. Im letzten Fall bietet es sich an, für die Pfade zu jedem einzelnen Objektiv separat Einstellparameter zu bestimmen und erst anschließend beide Pfade simultan zu nutzen. Dem Fachmann ist klar, wie er die Aussagen, soweit sie sich direkt oder implizit auf Mikroskopie im Auflicht beziehen, auf andere Mikroskopieanordnungen oder Verfahren übertragen kann.

Das erfindungsgemäße scannende Fluoreszenzmikroskop ist für die Durchführung des erfindungsgemäßen Verfahrens eingerichtet. Es weist eine Anregungslichtquelle für Anregungslicht, einem Mikroskopobjektiv zum Fokussieren einer Anregungslichtverteilung des Anregungslichts, eine Einrichtung zur Anbringung einer Probe, eine Einrichtung zum Verfahren eines Anregungslichtstrahls relativ zu einer angebrachten Probe in drei Raumrichtungen, eine einstellbare Korrektureinrichtung zur Aberrationskorrektur des Anregungslichts und eine Detektionseinrichtung zur Detektion von Fluoreszenzlicht und eine Speichereinrichtung zur Speicherung von Bilddatensätzen auf. Weiter weist das erfindungsgemäße scannende Fluoreszenzmikroskop eine Steuerung zur Einstellung der Korrektureinrichtung auf. Zudem weist es entweder eine Auswerteeinheit zur Auswertung von Bilddatensätzen und zur Festlegung neuer und finaler Einstellparameter einer Aberrationskorrekturfunktion, entsprechend der die einstellbare Korrektureinrichtung zur Aberrationskorrektur des Anregungslichts korrigiert wird, oder eine Anzeigeeinheit zur Anzeige von Bilddaten in Verbindung mit einer Eingabeeinheit zum Empfangen von Nutzereingaben hinsichtlich der Festlegung neuer und finaler Einstellparameter auf. Die Abtasteinrichtung ist zur Durchführung des ersten Schritts und des vierten Schritts des erfindungsgemäßen Verfahrens ausgebildet, und entweder ist die Auswerteeinheit zur Durchführung des zweiten Schritts und des dritten Schritts des erfindungsgemäßen Verfahrens oder die Anzeigeeinheit zur Anzeige des in dem ersten Schritt des erfindungsgemäßen Verfahrens aufgenommenen und zu der optischen Achse des Mikroskopobjektivs parallelen ersten Schnittbilds ausgebildet. In dem letzteren Fall werden der zweite Schritt und des dritten Schritts des erfindungsgemäßen Verfahren von einem menschlichen Beobachter auf Basis des angezeigten Schnittbilds ausgeführt, wobei er Nutzereingaben in die Eingabeeinheit macht, die den von ihm neu festgelegten Einstellparametern entsprechen.

In einer bevorzugten Ausführungsform ist die Korrektureinrichtung ein deformierbarer Spiegel, der in einem gemeinsamen Pfad von Anregungs- und Detektionslicht angeordnet ist.

Weiter bevorzugt weist das erfindungsgemäße scannende Fluoreszenzmikroskop zusätzlich eine Depletionslichtquelle und Einrichtungen zur Formung des Depletionsfokus auf. Bevorzugt ist der deformierbare Spiegel in diesem Fall der in einem gemeinsamen Pfad von Anregungs-, Detektions- und Depletionslicht angeordnet.

Die Verwendung eines verformbaren Spiegels als Korrektureinrichtung hat den Vorteil, dass dessen optische Eigenschaften nicht von der Wellenlänge oder dem Polarisationszustand abhängen. Ein deformierbarer Spiegel kann außer als Korrektureinrichtung gleichzeitig auch zur Verlagerung des Fokus genutzt werden. Somit ermöglicht er ein schnelles Abtasten in axialer Richtung. Dies ist auch und besonders vorteilhaft mit Blick auf das auf eine Verbesserung der Homogenität der Bildhelligkeit gerichtete Bildaufnahmeverfahren.

Vorteilhafte Weiterbildungen der Erfindung ergeben sich aus den Patentansprüchen und der Beschreibung. Dabei sind die Ansprüche nicht dahingehend zu verstehen, dass nur solche Gegenstände, Vorrichtungen oder Verfahren, die jeweils nur alle oder keines der Merkmale eines abhängigen Anspruchs zusätzlich zu den Merkmalen der unabhängigen Ansprüche 1, 14 und 15 aufweisen, mögliche Weiterbildungen der Erfindung sein können. Vielmehr können sich weitere Weiterbildungen aus jedem einzelnen der in den abhängigen Patentansprüchen oder in der Beschreibung genannten Merkmale, die einzeln oder kumulativ zur Wirkung kommen können, ergeben.

### BESCHREIBUNG DER FIGUREN UND WEITERE ERLÄUTERUNG DER ERFINDUNG

Im Folgenden wird anhand der Figuren die Ausführbarkeit der Erfindung dargelegt und die Erfindung weiter erläutert.
- **Fig. 1**: zeigt ein Bild eines Schnitts parallel zur optischen Achse eines Fluoreszenzmikroskops durch eine Probe, erhalten ohne Anwendung einer Aberrationskorrekturfunktion.
- **Fig. 2**: zeigt ein entsprechendes Schnittbild wie in Fig. 1, erhalten unter Anwendung neuer, nicht finaler Einstellparameter einer Aberrationskorrekturfunktion.
- **Fig. 3**: zeigt ein entsprechendes Schnittbild wie in Fig. 1 und 2, erhalten unter Anwendung finaler Einstellparameter einer Aberrationskorrekturfunktion.
- **Fig. 4**: ist eine Darstellung eines Volumendatensatzes einer Probe.
- **Fig. 5**: ist ein Ablaufdiagramm einer ersten Ausführungsform des erfindungsgemäßen Verfahrens.
- **Fig. 6**: ist ein Ablaufdiagramm einer zweiten, iterativen Ausführungsform des erfindungsgemäßen Verfahrens.
- **Fig. 7**: ist ein Ablaufdiagramm einer dritten, ebenfalls iterativen Ausführungsform des erfindungsgemäßen Verfahrens; und
- **Fig. 8**: ein Blockdiagramm einer Ausführungsform des erfindungsgemäßen scannenden Fluoreszenzmikroskops.

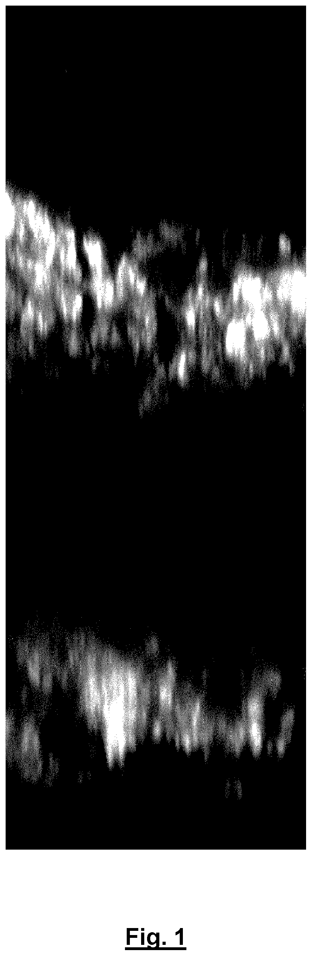

In **Fig. 1** ist ein Schnittbild einer Probe dargestellt. Die Aufnahme erfolgte als ein ebener Schnitt parallel zur optischen Achse des Objektivs eines konfokalen Laserscanning-Fluoreszenzmikroskops. Das Abtasten in axialer Richtung erfolgte durch Verschiebung des Objektivs. Im Bild ist ein Bereich erfasst, der sich in axialer Richtung ungefähr 140 µm erstreckt. Der obere Bildrand entspricht ungefähr der Position des Deckglases. Das verwendete Mikroskop weist in einem gemeinsamen Abschnitt von Anregungs- und Detektionspfad einen verformbaren Spiegel auf. Während des axialen Scannens wurde dieser Spiegel entsprechend anfänglicher Einstellparameter eingestellt. Es ist zu erkennen, dass insbesondere die Strukturen nahe dem unteren Bildrand unscharf erscheinen, aber auch die Strukturen näher dem oberen Bildrand erscheinen unscharf.

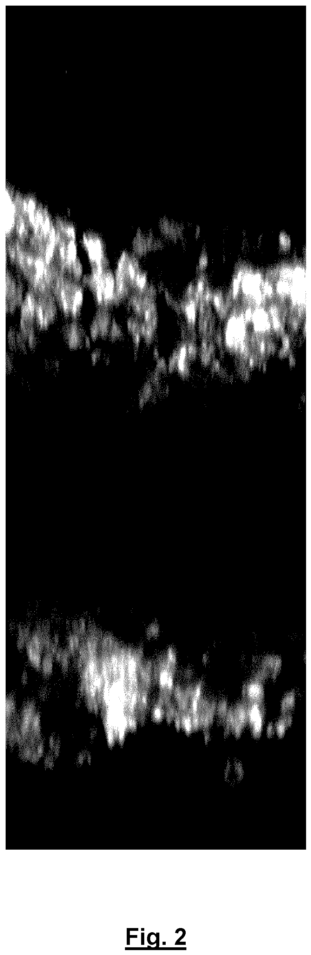

In **Fig. 2** ist ein weiteres, entsprechend aufgenommenes Schnittbild derselben Probe dargestellt. Während des axialen Scannens erfolgte eine Korrektur der Wellenfront mit neuen Einstellparametern, die auf Grundlage einer visuellen Inspektion des ersten Schnittbilds festgelegt wurden. Es ist zu erkennen, dass sowohl die Strukturen nahe dem oberen als auch die nahe dem unteren Bildrand schärfer abgebildet sind. Weiter ist bei einem Vergleich von Fig. 1 und Fig. 2 zu erkennen, dass insbesondere die Strukturen nahe dem unteren Bildrand im zweiten Bild näher an den oberen Bildrand gerückt erscheinen als im ersten Bild. Hierauf wird weiter unten noch eingegangen.

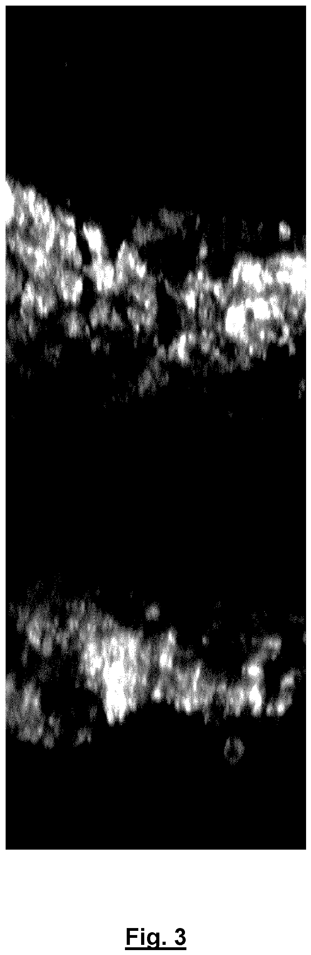

In **Fig. 3** ist ein weiteres, entsprechend aufgenommenes Schnittbild derselben Probe dargestellt. Während des axialen Scannens erfolgte eine Korrektur der Wellenfront mit neuen Einstellparametern, die auf Grundlage einer visuellen Inspektion des zweiten Schnittbilds festgelegt wurden. Diese Einstellparameter wurden anschließend nach Aufnahme des dritten Schnittbilds als finale Einstellparameter festgelegt. Es ist zu erkennen, dass sowohl die Strukturen nahe dem oberen als auch die nahe dem unteren Bildrand noch schärfer abgebildet sind und dass die Bildschärfe in beiden Bereichen ähnlich gut ist. Gegenüber dem zweiten Bild erscheinen nun sowohl die Strukturen am oberen als auch die am unteren Bildrand näher an den oberen Bildrand herangerückt. Hierauf wird weiter unten noch eingegangen.

Bei den dargestellten Daten handelt es sich um tatsächliche experimentelle Daten. Tatsächlich wurde also in einem Prozess unter Nutzung einer visuellen Inspektion mit zwei Auswerte- und Festlegungsschritten eine Korrektur erreicht, die zu einer sehr signifikanten Verbesserung der Bildqualität geführt hat. Dies wurde im dritten Schritt lediglich überprüft. Im Rahmen der Arbeiten der Anmelderin wurden weitere Korrekturprozesse durchgeführt, bei denen sich bestätigt hat, dass mit wenigen Schritten eine sehr gute Korrektur erreicht werden kann.

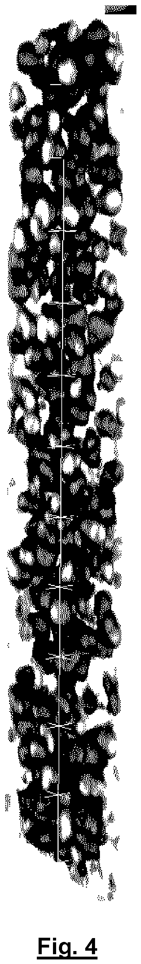

In **Fig. 4** ist ein Volumendatensatz einer anderen Probe dargestellt. Der Bildbereich erfasst einen Bereich der Probe, der sich in axialer Richtung etwa 50 µm erstreckt. Die Abtastung der Probe erfolgte unter Anwendung einer Aberrationskorrektur. Im Bild ist zu erkennen, dass die Bildschärfe im gesamten Bereich entlang der optischen Achse ungefähr gleich bleibt.

Die in den Figuren 1 bis 3 erkennbare Verschiebung hat seine Ursache in der praktischen Umsetzung des Verfahrens. Weiter oben wurde dargelegt, dass bestimmte Aberrationen durch radialsymmetrische Zernike-Polynome geradzahliger Ordnung darstellbar seien. Die Zernike-Polynome bilden auf dem Einheitskreis einen Satz orthogonaler Funktionen. Dies bedeutet, dass die Korrektur einer ebenen Wellenfront mit einheitlicher Intensität über ihren Querschnitt hinsichtlich ihrer verschiedenen, jeweils durch ein bestimmtes Zernike-Polynom beschreibbaren Aberrationen unabhängig voneinander vorgenommen werden kann. Mit anderen Worten: ein Defokus kann korrigiert werden, ohne dass eine andere sphärische Aberration korrigiert wird und umgekehrt. Tatsächlich ist diese Bedingung aber streng nur erfüllt, wenn die Intensität einer Wellenfront über ihren Querschnitt konstant ist. Es mag dabei sein, dass wellenoptisch die Konstanz der mittleren Feldstärke entscheidend ist, aber wenn diese konstant ist, dann ist auch die Intensität konstant. Für die weiteren Betrachtungen spielt dies keine Rolle.

Die Korrektur einer Wellenfront kann auf einfache Weise erreicht werden, indem ein verformbarer Spiegel genutzt wird. Alternativ kann auch ein als SLM bekannter, auf Flüssigkristalltechnologie basierenden Wellenfrontmodulator genutzt werden. Auch eine Kombination von Spiegel oder SLM und einer Vario-Linse oder einer verschiebbaren Linse ist denkbar, wobei linsenoptische Elemente vor allem geeignet sind, einen Fokus zu verlagern. Hier wurde ein verformbarer Spiegel im für Anregung und Detektion gemeinsamen Strahlengang verwendet, der unter kleinem Winkel, d. h. nahezu senkrecht, von der Wellenfront beaufschlagt wird und diese reflektiert. Dieser Spiegel wurde nun in einer Art verformt, dass die Form einer Summe von radialsymmetrischen Zernike-Polynomen geradzahliger Ordnung entspricht, wobei ein Defokus-Term nicht verwendet wurde. Da der Spiegel gleichzeitig auch im Detektionsstrahlengang platziert ist, wurde die Korrektur für den Anregungsstrahlengang unmittelbar auch auf den Detektionsstrahlengang angewendet. Im idealen Fall, d. h. unter der Bedingung, dass die Intensität einer Wellenfront über ihren Querschnitt konstant wäre, würde die durch den Spiegel versursachte Wellenfrontmodfikation ausschließlich den Effekt haben, dass die Foki verbessert werden, ohne aber deren Lage zu verändern. Um dies zu erreichen, muss weiter gegeben sein, dass der verformbare Spiegel in einer zur Rückapertur konjugierten Ebene platziert ist und dass das Bild der gemäß Zernike-Polynomen verformten Fläche die Rückapertur genau ausfüllt. Letztere Bedingungen wurde in sehr guter Näherung erfüllt, indem die Achse des verformbaren Spiegels in einer solchen zur Rückapertur konjugierten Ebene positioniert wurde und indem der Winkel, unter dem der Spiegel von der Wellenfront beaufschlagt wird, klein gewählt wurde und indem eben genau ein Fläche des Spiegels genutzt und verformt wurde, die in die Rückapertur abgebildet wurde. Dies gilt in guter Näherung selbst bei der Verschiebung des Objektivs und damit der Rückapertur, die im Zusammenhang der axialen Abtastung der Probe durchgeführt wurde, da diese Verschiebung im Vergleich zur Brennweite sehr klein ist.

Eine Ursache der Verschiebung liegt nun darin, dass der verwendete Anregungsstrahl eben gerade keine konstante Intensität über den Querschnitt aufweist, sondern eher einem Gaußprofil entspricht. Damit wird die Orthogonalität der Zernike-Polynome zueinander gebrochen. Die Folge ist, wie in den Figuren 1 bis 3 zu erkennen, dass ein Aufprägen einer Wellenfrontmodulation, die im Idealfall den Defokus nicht korrigiert, sondern nur sphärische Aberrationen, auch den Fokus verschiebt. Gleichzeitig ist aber anhand der Figuren zu erkennen, dass trotzdem eine gute Korrektur möglich ist. Die Figuren belegen damit gleichzeitig, dass die möglicherweise vorhandene Wirkung der unterschiedlichen Intensitätsverteilungen über Anregungs- und Detektionslicht in der Rückapertur und dazu konjugierten Ebenen hinreichend klein ist, sodass eine Anwendung der Aberrationskorrektur für den Anregungsstrahl auf das Detektionslicht zu einer guten Korrektur führt. Zu berücksichtigen ist lediglich, dass in axialer Richtung das Bild je nach Korrektur gestreckt oder gestaucht wird. Im dargestellten Beispiel ist es nach Korrektur gestaucht. Sind Proben homogen, stört dies wenig und kann leicht korrigiert werden. Sind die Proben in der Art inhomogen, dass an verschiedenen lateralen Positionen unterschiedliche Korrekturen der durch radialsymmetrische Zernike-Polynome gerader Ordnung darstellbaren Aberrationen notwendig sind, so führt dies dazu, dass Punkte, die innerhalb derselben Ebene senkrecht zur optischen Achse liegen, im Volumenbild axial versetzt erscheinen können. Dieser Effekt ist in vielen Fällen vernachlässigbar klein. Wenn er groß ist, ist dies aus den bestimmten Korrekturparametern bekannt, sodass der Effekt berücksichtigt werden kann.

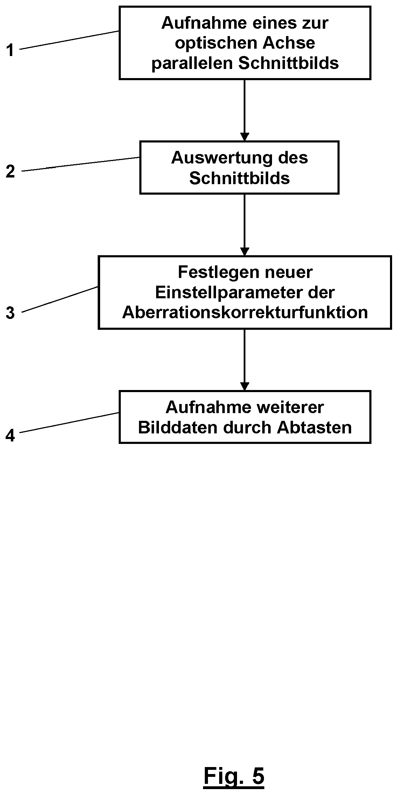

**Fig. 5** ist ein Ablaufdiagramm einer ersten Ausführungsform des erfindungsgemäßen Verfahrens. In einem ersten Schritt 1 erfolgt die Aufnahme eines zur optischen Achse parallelen Schnittbilds durch Abtasten einer Probe mit einer fokussierten Anregungslichtverteilung, wobei die Anregungslichtverteilung gemäß anfänglicher Einstellparameter einer Aberrationskorrekturfunktion korrigiert wird. Dadurch wird beispielsweise das Schnittbild von Fig. 1 erhalten. In einem anschließenden Schritt 2 erfolgt die Auswertung dieses Schnittbilds. In einem Schritt 3 erfolgt dann das Festlegen neuer Einstellparameter der Aberrationskorrekturfunktion, um die anhand des Schnittbilds noch festgestellten Aberrationen möglichst vollständig zu beseitigen. Mit diesen neuen Einstellparametern erfolgt dann in einem Schritt 4 die Aufnahme weiterer Bilddaten durch Abtasten. In dem Schritt 4 kann dann beispielsweise das Schnittbild von Fig. 3 aufgenommen werden.

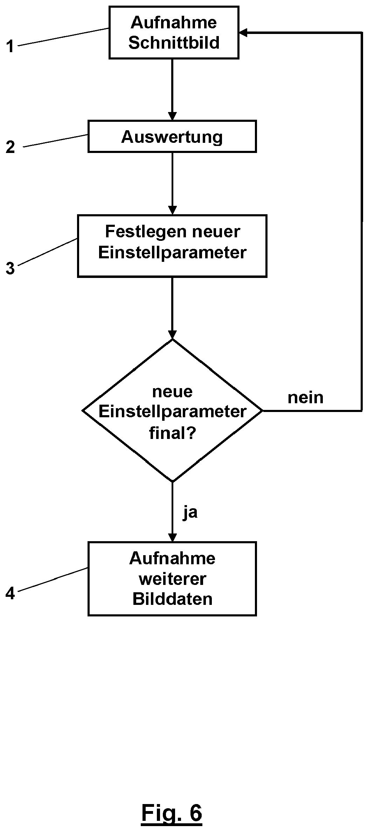

**Fig. 6** ist ein Ablaufdiagramm einer ersten iterativen Ausführungsform des erfindungsgemäßen Verfahrens. Hier folgt auf das Festlegen der neuen Einstellparameter im Schritt 3 die Prüfung, ob die neuen Einstellparameter final sind. Wenn dies der Fall ist, erfolgt im Schritt 4 die Aufnahme weiterer Bilddaten. Falls die neuen Einstellparameter noch nicht final sind, weil beispielsweise die Änderung gegenüber den früheren Einstellparametern noch sehr groß waren, werden die Schritte 1 bis 3 wiederholt.

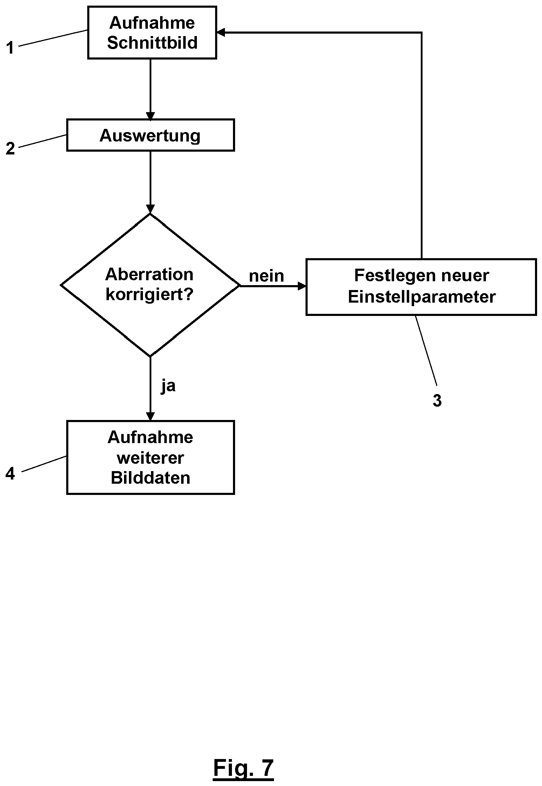

**Fig. 7** ist ebenfalls ein Ablaufdiagramm einer iterativen Ausführungsform des erfindungsgemäßen Verfahrens. Hier erfolgt nach der Auswertung im Schritt 2 eine Überprüfung, ob bereits mit den ursprünglichen Einstellparametern der Aberrationskorrekturfunktion alle Aberrationen ausreichend korrigiert sind. Nur wenn dies nicht der Fall ist, werden in dem Schritt 3 neue Einstellparameter festgelegt und dann damit die Schritte 1 und 2 wiederholt. Der Schritt 4, d. h. die Aufnahme weiterer Bilddaten, die die eigentlich interessierenden Bilddaten sind, mit der vollständig aberrationskorrigierten Anregungslichtverteilung erfolgt erst dann, wenn bei der Auswertung im Schritt 2 festgestellt wurde, dass die Aberrationen ausreichend korrigiert sind. Auch bei der iterativen Ausführungsform des erfindungsgemäßen Verfahrens folgen der erste Schritt 1, der zweite Schritt 2, der dritte Schritt 3 und der vierte Schritt 4 in dieser Reihenfolge aufeinander, sobald auch nur einmal in dem Schritt 3 neue Einstellparameter festgelegt werden. Allerdings folgen hierauf Wiederholungen des ersten Schritts 1 und des zweiten Schritts 2, bevor der vierte Schritt 4 ausgeführt wird.

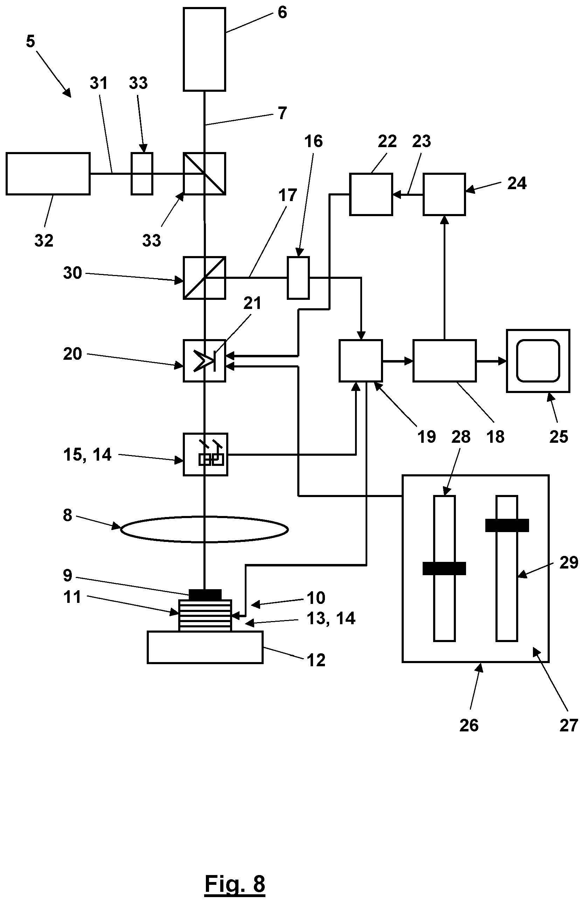

**Fig. 8** ist ein Blockdiagram einer Ausführungsform des erfindungsgemäßen scannenden Fluoreszenzmikroskops 5. Eine Anregungslichtquelle 6 stellt Anregungslicht 7 bereit. Ein Mikroskopobjektiv 8 fokussiert eine Anregungslichtverteilung des Anregungslichts 7 in eine Probe 9. Die Probe 9 ist auf einer Einrichtung 10 angebracht. Ein Probenhalter 11 der Einrichtung 10 ist gegenüber einem Sockel 12 mit einem hier als Piezostack angedeuteten Aktuator 13 in z-Richtung einer optischen Achse des Mikroskopobjektivs 8 verlagerbar. Alternativ oder zusätzlich könnte auch das Mikroskopobjektiv 8in z-Richtung einstellbar oder verlagerbar sein. Abtasteinrichtungen 14 zum Abtasten der Probe mit der fokussierten Anregungslichtverteilung in allen drei Raumrichtungen umfassen weiterhin einen x/y-Scanner 15. Eine Detektionseinrichtung 16 dient zur Detektion von aus der Probe emittiertem Fluoreszenzlicht 17 zu jeder Abtastposition der fokussierten Anregungslichtverteilung in der Probe 9. Eine Speichereinrichtung 18 dient der Speicherung von Bilddatensätzen, die von einem Kombinierer 19 aus den Stellungen des Scanners 15 und des Aktuators 13 und den zugehörigen Ausgangssignalen der Detektionseinrichtung 16 kombiniert werden. Eine einstellbare Korrektureinrichtung 20 ist dazu vorgesehen, Aberrationen der Anregungslichtverteilung in der Probe 9 zu korrigieren. Hierzu können Parameter einer Aberrationskorrekturfunktion, die mit der Korrektureinrichtung umgesetzt wird, eingestellt werden. Die Aberrationskorrekturfunktion ist eine Funktion der z-Position der fokussierten Anregungslichtverteilung in der Probe 9, d. h. der Position der fokussierten Anregungslichtverteilung längs der optischen Achse des Mikroskopobjektivs 8. Die Korrektureinrichtung 20 umfasst einen verformbaren Spiegel 21. Zur Einstellung der Korrektureinrichtung 20 ist eine Steuerung 22 vorgesehen. Diese erhält die Einstellparameter 23 für die Aberrationskorrekturfunktion von einer Auswerteeinrichtung 24. Die Auswerteeinrichtung 24 wertet Bilddatensätze der gemäß dem erfindungsgemäßen Verfahren aufgenommenen und parallel zu der optischen Achse des Mikroskopobjektivs 8 verlaufenden Schnittbilder aus, um die Einstellparameter 23 automatisch festzulegen. Alternativ kann eine manuelle Festlegung auf Basis der auf einer Anzeigeeinheit 25 angezeigten Schnittbilder erfolgen, und zwar über eine alternativ oder zusätzlich vorhandene weitere Steuerung 26, die eine Eingabeeinheit 27, hier mit zwei Schiebereglern 28 und 29 zum Einstellen von zwei Einstellparametern der Aberrationskorrekturfunktion, aufweist. Die Korrektureinrichtung 20 ist in einem gemeinsamen Pfad des Anregungslichts 7 und des Fluoreszenzlichts 17 vorgesehen, und zwar zwischen der Probe 9 und einem Strahlteiler 30 zum Auskoppeln des Fluoreszenzlichts 17 zu der Detektionseinrichtung 16. Dabei liegt die Korrektureinrichtung 20 auch in dem Pfad von zusätzlichen Depletionslicht 31, beispielsweise STED-Licht, von einer Depletionslichtquelle 32, das mit Hilfe eines Strahlteilers 33 mit dem Anregungslicht 7 zusammengeführt wird. Eine weitere Korrektureinrichtung 34 ist ausschließlich im Pfad des Depletionslichts 31 angeordnet und kann neben einer Aberrationskorrektur speziell des Depletionslichts 31 auch dazu vorgesehen sein, Wellenfronten des Depletionslichts 31 gezielt so zu formen, dass das Depletionslicht 31 beispielsweise ein lokales Intensitätsminimum im Ort eines zentralen Intensitätsmaximums der Anregungslichtverteilung aufweist.

## Patentansprüche

1. Verfahren zur mikroskopischen Bildaufnahme dreidimensional ausgedehnter Proben mit
- einem ersten Schritt (1), Aufnahme eines ersten Schnittbilds durch Abtasten einer Probe mit einer mit einem Mikroskopobjektiv (8) fokussierten Anregungslichtverteilung in einer Schnittfläche, wobei die Anregungslichtverteilung mittels einer einstellbaren Korrektureinrichtung (20) gemäß anfänglicher Einstellparameter einer Aberrationskorrekturfunktion korrigiert wird und wobei zu jeder Abtastposition aus der Probe emittiertes Fluoreszenzlicht detektiert wird, oder einer ersten Mehrzahl solcher Schnittbilder,
- einem zweiten Schritt (2), Auswertung des ersten Schnittbilds oder der ersten Mehrzahl solcher Schnittbilder,
- einem dritten Schritt (3), Festlegen neuer Einstellparameter der Aberrationskorrekturfunktion auf Basis der Auswertung in dem zweiten Schritt (2), und
- einem vierten Schritt (4), Aufnahme weiterer Bilddaten durch Abtasten einer Probe, die die erste Probe oder eine andere Probe ist, mit der fokussierten Anregungslichtverteilung, wobei die Anregungslichtverteilung mittels der einstellbaren Korrektureinrichtung (20) gemäß der neuen Einstellparameter der Aberrationskorrekturfunktion korrigiert wird und wobei zu jeder Abtastposition aus der Probe emittiertes Fluoreszenzlicht detektiert wird,
wobei die Schritte (1) bis (4) in der Reihenfolge ihrer Nennung ausgeführt werden,
**dadurch gekennzeichnet,**
- **dass** die Schnittfläche, in der die Probe in dem ersten Schritt (1) mit der fokussierten Anregungslichtverteilung abgetastet wird, parallel zu der optischen Achse des Mikroskopobjektivs (8) ist, sodass das erste Schnittbild parallel zu der optischen Achse des Mikroskopobjektivs (8) aufgenommen wird, und
- **dass** die Abberationskorrekturfunktion eine Funktion einer längs der optischen Achse des Mikroskopobjektivs (8) variierenden z-Position in der Probe (9) ist, wobei die Anregungslichtverteilung mittels der einstellbaren Korrektureinrichtung (20) zumindest dann, wenn die neuen Einstellparameter der Aberrationskorrekturfunktion in dem vierten Schritt (4) zur Anwendung kommen, nicht für alle z-Positionen in der Probe (9) gleich korrigiert wird.

2. Verfahren nach Anspruch 1, **dadurch gekennzeichnet, dass** die Aufnahme weiterer Bilddaten in dem vierten Schritt (4) eine Aufnahme eines weiteren Schnittbilds durch Abtasten der ersten Probe mit der fokussierten Anregungslichtverteilung in einer zu der optischen Achse des Mikroskopobjektivs parallelen Schnittfläche oder einer weiteren Mehrzahl von solchen Schnittbildern ist.

3. Verfahren nach Anspruch 1, **dadurch gekennzeichnet, dass** nach dem dritten Schritt (3) der erste Schritt (1) und der zweite Schritt (2) oder der der erste Schritt (1), der zweite Schritt (2) und der dritte Schritt (2) mindestens einmal wiederholt werden, bevor der vierte Schritt (4) ausgeführt wird.

4. Verfahren nach einem der Ansprüche 1 bis 3, **dadurch gekennzeichnet, dass** die Auswertung des ersten Schnittbilds oder der ersten Mehrzahl solcher Schnittbilder in dem zweiten Schritt (2) und das Festlegen neuer Einstellparameter in dem dritten Schritt (3) automatisch erfolgt.

5. Verfahren nach einem der Ansprüche 1 bis 3, **dadurch gekennzeichnet, dass** die Auswertung des ersten Schnittbilds oder der ersten Mehrzahl solcher Schnittbilder in dem zweiten Schritt (2) durch visuelle Inspektion durch einen menschlichen Beobachter erfolgt.

6. Verfahren nach einem der Ansprüche 1 bis 3 oder nach Anspruch 5, **dadurch gekennzeichnet, dass** das Festlegen neuer Einstellparameter in dem dritten Schritt (3) durch einen menschlichen Beobachter erfolgt.

7. Verfahren nach einem der vorherigen Ansprüche, **dadurch gekennzeichnet,**
- **dass** die Aberrationskorrekturfunktion eine lineare Funktion der z-Position längs der optischen Achse des Mikroskopobjektivs (8) ist und dass die Einstellparameter ein Aberrationskorrektur-Offset-Wert und eine Aberrationskorrektursteigung sind
oder
- **dass** die Aberrationskorrekturfunktion eine quadratische Funktion der z-Position längs der optischen Achse des Mikroskopobjektivs (8) ist.

8. Verfahren nach einem der der Ansprüche 1 bis 5, **dadurch gekennzeichnet, dass** die Aberrationskorrekturfunktion eine aus einem linearen oder quadratischen Funktionsanteil, der sich auf die Korrektur von Defokus und/oder sphärischen Aberrationen richtet, und einem Funktionsanteil, der sich auf eine Korrektur weiterer Aberrationen richtet, additiv zusammengesetzte Funktion einer z-Position längs der optischen Achse des Mikroskopobjektivs (8) ist.

9. Verfahren nach einem der vorherigen Ansprüche, **dadurch gekennzeichnet,**
- **dass** in dem ersten Schritt (1) und/oder in dem vierten Schritt (4) eine Mehrzahl von Schnittbildern mit untereinander unterschiedlichen Einstellparametern der Aberrationskorrekturfunktion aufgenommen wird
oder
- **dass** in dem ersten Schritt (1) und/oder in dem vierten Schritt (4) eine Mehrzahl von Schnittbildern mit untereinander identischen Einstellparametern der Aberrationskorrekturfunktion aufgenommen wird, und dass die Schnittflächen lateral beabstandet oder unter einem Winkel zueinander orientiert sind.

10. Verfahren nach einem der der vorherigen Ansprüche, **dadurch gekennzeichnet, dass** auf Basis einer visuellen Inspektion
- eines der aufgenommenen Schnittbilder,
- einer der aufgenommenen Mehrzahlen von Schnittbildern oder
- mehrerer der Schnittbilder, die in verschiedenen Iterationsstufen des Verfahrens aufgenommen wurden,
eine Einteilung der Probe (9) in axiale Teilbereiche erfolgt, für die die Einstellparameter der Aberrationskorrekturfunktion jeweils gesondert festgelegt werden.

11. Scannendes Fluoreszenzmikroskop (5) mit
- einer Anregungslichtquelle (6) für Anregungslicht (7),
- einem Mikroskopobjektiv (8) zum Fokussieren einer Anregungslichtverteilung des Anregungslichts (7),
- eine Einrichtung (10) zur Anbringung einer Probe (9),
- einer Abtasteinrichtung (14) zum Abtasten der Probe (0) mit der fokussierten Anregungslichtverteilung in drei Raumrichtungen,
- einer Detektionseinrichtung (16) zur Detektion von aus der Probe (9) emittiertem Fluoreszenzlicht (17) zu jeder Abtastposition,
- einer Speichereinrichtung (18) zur Speicherung von Bilddatensätzen,
einer einstellbaren Korrektureinrichtung (20) zur Korrektur von Aberrationen der Anregungslichtverteilung,
- einer Steuerung (22) zur Einstellung der Korrektureinrichtung (20) und
- einer Auswerteeinheit (24) zur Auswertung der Bilddatensätze und zur Festlegung von Einstellparametern (23) einer Aberrationskorrekturfunktion, entsprechend der die einstellbare Korrektureinrichtung (20) eingestellt wird,
**dadurch gekennzeichnet, dass**
- die Abtasteinrichtung (14) zur Durchführung des ersten Schritts (1) und des vierten Schritts (4) des Verfahrens nach einem der vorhergehenden Ansprüche ausgebildet ist und
- die Auswerteeinheit (24) zur Durchführung des zweiten Schritts (2) und des dritten Schritts (3) des Verfahrens nach einem der vorhergehenden Ansprüche ausgebildet ist,
- wobei die Abberationskorrekturfunktion eine Funktion einer längs der optischen Achse des Mikroskopobjektivs (8) variierenden z-Position in der Probe (9) ist, wobei die Anregungslichtverteilung mittels der einstellbaren Korrektureinrichtung (20) zumindest dann, wenn die neuen Einstellparameter der Aberrationskorrekturfunktion in dem vierten Schritt (4) zur Anwendung kommen, nicht für alle z-Positionen in der Probe (9) gleich korrigiert wird.

12. Scannendes Fluoreszenzmikroskop (5) mit
- einer Anregungslichtquelle (6) für Anregungslicht (7),
- einem Mikroskopobjektiv (8) zum Fokussieren einer Anregungslichtverteilung des Anregungslichts (7),
- eine Einrichtung (10) zur Anbringung einer Probe (8),
- einer Abtasteinrichtung (14) zum Abtasten der Probe (9) mit der fokussierten Anregungslichtverteilung in drei Raumrichtungen,
- einer Detektionseinrichtung (16) zur Detektion von aus der Probe emittiertem Fluoreszenzlicht (17) zu jeder Abtastposition,
- einer Speichereinrichtung (18) zur Speicherung von Bilddatensätzen,
- einer einstellbaren Korrektureinrichtung (20) zur Korrektur von Aberrationen der Anregungslichtverteilung,
- einer Steuerung (26) zur Einstellung der Korrektureinrichtung (20),
- einer Eingabeeinheit (27) zum Empfangen von Nutzereingaben hinsichtlich der Festlegung von Einstellparametern einer Aberrationskorrekturfunktion, entsprechend der die einstellbare Korrektureinrichtung (20) eingestellt wird, und
- einer Anzeigeeinheit (25) zur Anzeige der Bilddatensätze,
**dadurch gekennzeichnet, dass**
- die Abtasteinrichtung (14) zur Durchführung des ersten Schritts (1) und des vierten Schritts (4) des Verfahrens nach einem der Ansprüche 1 bis 10 ausgebildet ist,
- die Anzeigeeinheit (25) zur Anzeige des in dem ersten Schritt (1) des Verfahrens nach einem der Ansprüche 1-10 aufgenommenen und zu der optischen Achse des Mikroskopobjektivs (8) parallelen ersten Schnittbilds ausgebildet ist, und
- die Eingabeeinheit (27) zum Empfangen von Nutzereingaben hinsichtlich der Festlegung von Einstellparametern einer Aberrationskorrekturfunktion ausgebildet ist, die eine Funktion einer längs der optischen Achse des Mikroskopobjektivs (8) variierenden z-Position in der Probe (9) ist, wobei die Korrektureinrichtung (20) entsprechend der Aberrationskorrekturfunktion so einstellbar ist, dass die Anregungslichtverteilung mittels der eingestellten Korrektureinrichtung (20) nicht für alle z-Positionen in der Probe (9) gleich korrigiert wird.

13. Scannendes Fluoreszenzmikroskop (5) nach Anspruch 11 oder 12, **dadurch gekennzeichnet, dass** die Korrektureinrichtung (20) in einem für das Anregungslicht (7) und das Fluoreszenzlicht (17) gemeinsamen Pfad angeordnet ist.

14. Scannendes Fluoreszenzmikroskop (5) nach Anspruch 13, **dadurch gekennzeichnet,**
- **dass** es eine Depletionslichtquelle (32) für Depletionslicht (31) aufweist und
- **dass** die Korrektureinrichtung (20) in einem für das Anregungslicht (7), das Fluoreszenzlicht (17) und das Depletionslicht (31) gemeinsamen Pfad angeordnet ist,
- wobei optional in ausschließlich einem separaten Pfad für das Depletionslicht (31) eine zusätzliche Korrektureinrichtung (33), die zur Korrektur von Aberrationen des Depletionslichts (31) dient, angeordnet ist.

15. Scannendes Fluoreszenzmikroskop nach einem der Ansprüche 11 bis 14, **dadurch gekennzeichnet, dass** die Korrektureinrichtung (20) einen verformbaren Spiegel (21) aufweist.

## Claims

1. Method of microscopically recording images of samples extending in three-dimensions, comprising:
- a first step (1), recording a first sectional view by scanning a sample in a sectional plane with an excitation light distribution which is focused by means of a microscope lens (8), wherein the excitation light distribution is corrected by means of an adjustable correction device (20) according to initial adjustment parameters of an aberration correction function, and wherein, for each scanning position, fluorescence light emitted out of the sample is detected, or recording a first plurality of such sectional images,
- a second step (2), evaluation of the first sectional image or of the first plurality of such sectional images,
- a third step (3), setting new adjustment parameters of the aberration correction function on the basis of the evaluation in the second step (2), and
- a fourth step (4), recording further image data by scanning a sample, which is the first sample or another sample, with the focused excitation light distribution, wherein the excitation light distribution is corrected by means of the adjustable correction device (20) according to the new adjustment parameters of the aberration correction function, and wherein fluorescence light emitted out of the sample is detected for each scanning position,
wherein the steps (1) to (4) are executed in the order of their naming,
**characterized in**
- **that** the sectional plane in which the sample is scanned with the focused excitation light distribution in the first step (1) is parallel to the optical axis of the microscope lens (8) such that the first sectional image is recorded parallel to the optical axis of the microscope lens (8), and
- **that** the aberration correction function is a function of a z-position in the sample (9) that varies along the optical axis of the microscope lens (8), wherein, at least when the new adjustment parameters of the aberration correction function are applied in the fourth step (4), the excitation light distribution is not corrected by means of the adjustable correction device (20) for all z-positions in the sample (9) in a same way.

2. Method of claim 1, **characterized in that** the recording of further image data in the fourth step (4) is a recording of a further sectional image by scanning the first sample with the focused excitation light distribution in a sectional plane parallel to the optical axis of the microscope lens or of a further plurality of such sectional images.

3. Method of claim 1, **characterized in that**, before the fourth step (4) is executed, the first step (1) and the second step (2), or the first step (1), the second step (2) and the third step (3) are repeated at least once after the third step (3).

4. Method of any of the claims 1 to 3, **characterized in that** the evaluation of the first sectional image or of the first plurality of such sectional images in the second step (2) and the setting of new adjustment parameters in the third step (3) take place automatically.

5. Method of any of the claims 1 to 3, **characterized in that** the evaluation of the first sectional image or of the first plurality of such sectional images in the second step (2) takes place by visual inspection by a human observer.

6. Method of any of the claims 1 to 3 or of claim 5, **characterized in that** the setting of new adjustment parameters in the third step (3) takes place by a human observer.

7. Method of any of the preceding claims, **characterized in**
- **that** the aberration correction function is a linear function of the z-position along the optical axis of the microscope lens (8) and that the adjustment parameters are an aberration correction offset value and an aberration correction slope, or
- **that** the aberration correction function is a square function of the z-position along the optical axis of the microscope lens (8).

8. Method of any of the claims 1 to 5, **characterized in that** the aberration correction function is a function of a z-position along the optical axis of the microscope lens (8) that is additively composed of a linear or square function part that is directed to the correction of defocus and/or spherical aberrations and of a function part that is directed to a correction of further aberrations.

9. Method of any of the preceding claims, **characterized in**
- **that**, in the first step (1) and/or in the fourth step (4), a plurality of sectional images are recorded with adjustment parameters of the aberration correction function which differ from one another, or
- **that**, in the first step (1) and/or in the fourth step (4), a plurality of sectional images are recorded with adjustment parameters of the aberration correction function which are identical to one another, and that the sectional planes are arranged at a lateral distance and/or oriented at an angle with respect to one another.

10. Method of any of the preceding claims, **characterized in that**, on the basis of a visual inspection
- of one of the sectional images recorded,
- of one of the pluralities of sectional images recorded, or
- of several of the sectional images which have been recorded in different iteration stages of the method,
the sample (9) is partitioned into partial axial areas, wherein the adjustment parameters of the aberration correction function are separately set for each of the partial axial areas.

11. Scanning fluorescence microscope (5) comprising
- an excitation light source (6) for excitation light (7),
- a microscope lens (8) for focusing an excitation light distribution of the excitation light (7),
- a device (10) for mounting a sample (9),
- a scanning device (14) for scanning the sample (9) with the focused excitation light distribution in three spatial dimensions,
- a detection device (16) for detecting fluorescence light (17) emitted out of the sample (9) for each scanning position,
- a storage device (18) for storing sets of image data,
- an adjustable correction device (20) for correcting aberrations of the excitation light distribution,
- a controller (22) for adjusting the correction device (20), and
- an evaluation unit (24) for evaluating the image data sets and for setting adjustment parameters (23) of the aberration correction function according to which the adjustable correction device (20) is adjusted,
**characterized in that**
- the scanning device (14) is configured for executing the first step (1) and the fourth step (4) of the method according to any of the preceding claims, and
- the evaluation unit (24) is configured for executing the second step (2) and third step (3) of the method according to any of the preceding claims,
- wherein the aberration correction function is a function of a z-position in the sample (9) that varies along the optical axis of the microscope lens (8), wherein, at least when the new adjustment parameters of the aberration correction function are applied in the fourth step (4), the excitation light distribution is not corrected by means of the adjustable correction device (20) for all z-positions in the sample (9) in a same way.

12. Scanning fluorescence microscope (5) comprising
- an excitation light source (6) for excitation light (7),
- a microscope lens (8) for focusing a excitation light distribution of the excitation light (7),
- a device (10) for mounting a sample (9),
- a scanning device (14) for scanning the sample (9) with the focused distribution of the excitation light in three spatial dimensions,
- a detection device (16) for detecting fluorescence light (17) emitted out of the sample for each scanning position,
- a storage device (18) for storing sets of image data,
- an adjustable correction device (18) for correcting aberrations of the excitation light distribution,
- a controller (26) for adjusting the correction device (20),
- an input unit (27) for receiving user input with respect to the setting of the adjustment parameters of an aberration correction function corresponding to which the adjustable correction device (20) is adjusted, and
- an display unit (25) for displaying the sets of image data,
**characterized in that**
- the scanning device (14) is configured for executing the first step (1) and the fourth step (4) of the method of any of the claims 1 to 10,
- the display unit (25) is configured for displaying the first sectional image which is recorded in the first step (1) of the method according to any of the claims 1 to 10 and parallel to the optical axis of the microscope lens (8), and
- the input unit (27) is configured for receiving user input with respect to the setting of the adjustment parameters of an aberration correction function which is a function of a z-position in the sample (9) that varies along the optical axis of the microscope lens (8), wherein the correction device (18) is adjustable according to the aberration correction function such that the excitation light distribution is not corrected by means of the adjusted correction device (20) for all z-positions in the sample (9) in a same way.

13. Scanning fluorescence microscope (5) according to claim 11 or 12, **characterized in that** the correction device (20) is arranged in a common path for the excitation light (7) and the fluorescence light (17).

14. Scanning fluorescence microscope (5) of claim 13, **characterized in**
- **that** it comprises a depletion light source (32) for depletion light (31), and
- **that** the correction device (20) is arranged in a common path for the excitation light (7), the fluorescence light (17) and the depletion light (31),
- wherein, optionally, an additional correction device (33) which serves for correcting aberrations of the depletion light (31) is exclusively arranged in a separate path for the depletion light (31).

15. Scanning fluorescence microscope of any of the claims 11 to 14, **characterized in that** the correction device (20) comprises a deformable mirror (21).

## Revendications

1. Procédé pour l'enregistrement d'images microscopiques d'échantillons à extension tridimensionnelle avec
- une première étape (1), enregistrement d'une première image de coupe par balayage d'un échantillon avec une distribution de lumière d'excitation focalisée avec un objectif de microscope (8) sur une surface de coupe, dans lequel la distribution de lumière d'excitation est corrigée au moyen d'un dispositif de correction réglable (20) selon les paramètres de réglage initiaux d'une fonction de correction d'aberration et dans lequel, à chaque position de balayage, la lumière de fluorescence émise à partir de l'échantillon est détectée, ou d'une première pluralité de ces images de coupe,
- une deuxième étape (2), analyse de la première image de coupe ou de la première pluralité de ces images de coupe,
- une troisième étape (3), définition de nouveaux paramètres de réglage de la fonction de correction d'aberration sur la base de l'analyse dans la deuxième étape (2) et
- une quatrième étape (4), enregistrement d'autres données d'images par balayage d'un échantillon, le premier échantillon ou un autre échantillon, avec la distribution de lumière d'excitation focalisée, dans lequel la distribution de lumière d'excitation est corrigée au moyen du dispositif de correction réglable (20) selon les nouveaux paramètres de réglage de la fonction de correction d'aberration et dans lequel, à chaque position de balayage, la lumière de fluorescence émise à partir de l'échantillon est détectée,
dans lequel les étapes (1) à (4) sont exécutées dans l'ordre de leur mention, **caractérisé en ce que**
- la surface de coupe dans laquelle l'échantillon est balayé dans la première étape (1) avec la distribution de lumière d'excitation focalisée, est parallèle à l'axe optique de l'objectif du microscope (8), de sorte que la première image de coupe est enregistrée parallèlement à l'axe optique de l'objectif du microscope (8) et
- la fonction de correction d'aberration est une fonction d'une position z variable le long de l'axe optique de l'objectif du microscope (8) dans l'échantillon (9), dans lequel la distribution de lumière d'excitation au moyen du dispositif de correction réglable (20) n'est pas corrigée de manière identique pour toutes les positions z dans l'échantillon (9), au moins lorsque les nouveaux paramètres de réglage de la fonction de correction d'aberration sont appliqués dans la quatrième étape (4).

2. Procédé selon la revendication 1, **caractérisé en ce que** l'enregistrement d'autres données d'images dans la quatrième étape (4), est un enregistrement d'une autre image de coupe par balayage du premier échantillon avec la distribution de lumière d'excitation focalisée dans une surface de coupe parallèle à l'axe optique de l'objectif du microscope ou d'une autre pluralité de ces images de coupe.

3. Procédé selon la revendication 1, **caractérisé en ce que**, après la troisième étape (3), la première étape (1) et la deuxième étape (2) ou la première étape (1), la deuxième étape (2) et la troisième étape (2) sont répétées au moins une fois avant que la quatrième étape (4) soit exécutée.

4. Procédé selon l'une des revendications 1 à 3, **caractérisé en ce que** l'analyse de la première image de coupe ou de la première pluralité de ces images de coupe dans la deuxième étape (2) et la définition de nouveaux paramètres de réglage dans la troisième étape (3) sont effectuées automatiquement.

5. Procédé selon l'une des revendications 1 à 3, **caractérisé en ce que** l'analyse de la première image de coupe ou de la première pluralité de ces images de coupe dans la deuxième étape (2) est effectuée grâce à une inspection visuelle par un observateur humain.

6. Procédé selon l'une des revendications 1 à 3 ou selon la revendication 5, **caractérisé en ce que** la définition de nouveaux paramètres de réglage dans la troisième étape (3) est effectuée par un observateur humain.

7. Procédé selon l'une des revendications précédentes, **caractérisé en ce que**
- la fonction de correction d'aberration est une fonction linéaire de la position z le long de l'axe optique de l'objectif du microscope (8) et **en ce que** les paramètres de réglage sont une valeur d'offset de correction d'aberration et une pente de correction d'aberration
ou
- la fonction de correction d'aberration est une fonction carrée de la position z le long de l'axe optique de l'objectif du microscope (8).

8. Procédé selon l'une des revendications 1 à 5, **caractérisé en ce que** la fonction de correction d'aberration est une fonction, composée de manière additive d'une partie de fonction carrée, qui permet la correction de la défocalisation et/ou des aberrations sphériques, et une partie de fonction qui permet une correction d'autres aberrations, d'une position z le long de l'axe optique de l'objectif du microscope (8).

9. Procédé selon l'une des revendications précédentes, **caractérisé en ce que**
- dans la première étape (1) et/ou dans la quatrième étape (4), une pluralité d'images de coupe avec des paramètres de réglage, différents entre eux, de la fonction de correction d'aberration, est enregistrée
ou
- dans la première étape (1) et/ou dans la quatrième étape (4), une pluralité d'images de coupe avec des paramètres de réglage, identiques entre eux, de la fonction de correction d'aberration, est enregistrée et les surfaces de coupe sont distantes latéralement ou sont orientées entre elles avec un angle.

10. Procédé selon l'une des revendications précédentes, **caractérisé en ce que**, sur la base d'une inspection visuelle
- d'une des images de coupe enregistrées,
- d'une des pluralités d'images de coupe enregistrées ou
- de plusieurs images de coupe, qui ont été enregistrées dans différentes étapes d'itération du procédé,
a lieu une division de l'échantillon (9) en parties axiales pour lesquelles les paramètres de réglage de la fonction de correction d'aberration sont définis respectivement séparément.

11. Microscope à fluorescence à balayage (5) avec
- une source de lumière d'excitation (6) pour une lumière d'excitation (7),
- un objectif de microscope (8) pour la focalisation d'une distribution de lumière d'excitation de la lumière d'excitation (7),
- un dispositif (10) pour la fixation d'un échantillon (9),
- un dispositif de balayage (14) pour le balayage de l'échantillon (0) avec la distribution de lumière d'excitation focalisée dans trois directions de l'espace,
- un dispositif de détection (16) pour la détection de la lumière de fluorescence (17) émise à partir de l'échantillon (9) à chaque position de balayage,
- un dispositif de stockage (18) pour le stockage de jeux de données d'images,
- un dispositif de correction réglable (20) pour la correction des aberrations de la distribution de lumière d'excitation,
- un dispositif de commande (22) pour le réglage du dispositif de correction (20) et
- une unité d'analyse (24) pour l'analyse des jeux de données d'images et pour la définition de paramètres de réglage (23) d'une fonction de correction d'aberration en fonction desquels le dispositif de correction réglable (20),
**caractérisé en ce que**
- le dispositif de balayage (14) est conçu pour la réalisation de la première étape (1) et de la quatrième étape (4) du procédé selon l'une des revendications précédentes et
- l'unité d'analyse (24) est conçue pour la réalisation de la deuxième étape (2) et de la troisième étape (3) du procédé selon l'une des revendications précédentes,
- dans lequel la fonction de correction d'aberration est une fonction d'une position z dans l'échantillon (9) variable le long de l'axe optique de l'objectif du microscope (8), dans lequel la distribution de lumière d'excitation n'est pas corrigée de manière identique au moyen du dispositif de correction réglable (20) pour toutes les positions z dans l'échantillon (9), au moins lorsque les nouveaux paramètres de réglage de la fonction de correction d'aberration sont appliqués dans la quatrième étape (4).

12. Microscope à fluorescence à balayage (5) avec
- une source de lumière d'excitation (6) pour une lumière d'excitation (7),
- un objectif de microscope (8) pour la focalisation d'une distribution de lumière d'excitation de la lumière d'excitation (7),
- un dispositif (10) pour la fixation d'un échantillon (9),
- un dispositif de balayage (14) pour le balayage de l'échantillon (9) avec la distribution de lumière d'excitation focalisée dans trois directions de l'espace,
- un dispositif de détection (16) pour la détection de la lumière de fluorescence (17) émise à partir de l'échantillon (9) à chaque position de balayage,
- un dispositif de stockage (18) pour le stockage de jeux de données d'images,
- un dispositif de correction réglable (20) pour la correction des aberrations de la distribution de lumière d'excitation,
- un dispositif de commande (26) pour le réglage du dispositif de correction (20),
- une unité d'entrée (27) pour la réception d'entrées d'utilisateurs concernant la définition de paramètres de réglage d'une fonction de correction d'aberration, en fonction desquels le dispositif de correction réglable (20) est réglé et
- une unité d'affichage (25) pour l'affichage des jeux de données d'images, **caractérisé en ce que**
- le dispositif de balayage (14) est conçu pour la réalisation de la première étape (1) et de la quatrième étape (4) du procédé selon l'une des revendications 1 à 10,
- l'unité d'affichage (25) est conçue pour l'affichage de la première image de coupe enregistrée dans la première étape (1) du procédé selon l'une des revendications 1 à 10 et parallèle à l'axe optique de l'objectif du microscope (8) et
- l'unité d'entrée (27) est conçue pour la réception d'entrées d'utilisateurs concernant la définition de paramètres de réglage d'une fonction de correction d'aberration, qui est une fonction d'une position z dans l'échantillon (9) variable le long de l'axe optique de l'objectif du microscope (8), dans lequel le dispositif de correction (20) est réglable en fonction de la fonction de correction d'aberration, de sorte que la distribution de lumière d'excitation n'est pas corrigée de manière identique pour toutes les positions z dans l'échantillon (9) au moyen du dispositif de correction réglé (20).

13. Microscope à fluorescence à balayage (5) selon la revendication 11 ou 12, **caractérisé en ce que** le dispositif de correction (20) est disposé sur un trajet commun à la lumière d'excitation (7) et à la lumière de fluorescence (17).

14. Microscope à fluorescence à balayage (5) selon la revendication 13, **caractérisé en ce que**
- il comprend une source de lumière de déplétion (32) pour une lumière de déplétion (31) et
- le dispositif de correction (20) est disposé sur un trajet commun à la lumière d'excitation (7), à la lumière de fluorescence (17) et à la lumière de déplétion (31),
- dans lequel, en option, exclusivement sur un trajet séparé pour la lumière de déplétion (31), est disposé un dispositif de correction supplémentaire (33) qui permet la correction d'aberrations de la lumière de déplétion (31).

15. Microscope à fluorescence à balayage selon l'une des revendications 11 à 14, **caractérisé en ce que** le dispositif de correction (20) comprend un miroir déformable (21).
